# EUROPEAN PATENT APPLICATION

(11) **EP 1 909 523 A1**
(43) Date of publication of application: **09.04.2008**
(21) Application number: 07005203.0
(22) Date of filing: 13.03.2007
(51) Int. Cl.: H04Q 7/38

(54) **Improved acquisition of system information of another cell**

(30) Priority: 02.10.2006 EP 06020726
(71) Applicant: MATSUSHITA ELECTRIC INDUSTRIAL CO., LTD., Kadoma-shi, Osaka Osaka 571-0051 (JP)
(72) Inventor: Petrovic, Dragan, 63225 Langen (DE); Aoyama, Takahisa, Osaka 540-6319 (JP)
(74) Representative: Grünecker, Kinkeldey, Stockmair & Schwanhäusser Anwaltssozietät

(57) **Abstract**

Method for informing a mobile terminal (MN), which is located in a first cell, on system information of a second cell. In particular, pointers to the system information are transmitted from the base station of the first cell to the mobile node, while the mobile node is located in the first cell. The MN processes said pointer, comprising e.g. information on the transmission format and timing of system information in the second cell. Using an acquisition gap assigned by the network, the MN changes the frequency to the second frequency so as to acquire the system information based on the previously received scheduling information. Thus, the acquisition time for important system information may be reduced, as no Master Information Block on the second frequency has to be processed first, in order to acquire the system information.

## Description

### FIELD OF THE INVENTION

The invention relates to a method for informing a mobile terminal located within a first cell of a mobile communication system on system information of a second cell broadcast within the second cell. Thereby, e.g. a mobility procedure such as handover or cell (re)selection may be facilitated. The invention provides different method steps so as to enable the mobile node to efficiently acquire said relevant system information blocks. Furthermore, the invention relates to a mobile node and a radio control entity, which participate in the invention.

### TECHNICAL BACKGROUND

W-CDMA (Wideband Code Division Multiple Access) is a radio interface for IMT-2000 systems (International Mobile Telecommunication system), which was standardized for use as the 3rd generation wireless mobile telecommunication system. It provides a variety of services such as voice services and multimedia mobile communication services in a flexible and efficient way. The standardization bodies in Japan, Europe, USA, and other countries have jointly organized a project called the 3rd Generation Partnership Project (3GPP) to produce common radio interface specifications for W-CDMA.
The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4, Release 5 and Release 6.
Recently, the 3GPP has begun considering the next major step or evolution of the 3G standard to ensure the long-term competitiveness of 3G. The 3GPP recently launched a study item "Evolved UTRA and UTRAN" better known as "Long Term Evolution (LTE)". The study will investigate means of achieving major leaps in performance in order to improve service provisioning and to reduce user and operator costs. It is generally assumed that Internet Protocols (IP) will be used in mobility control, and that all future services will be IP-based. Therefore, the focus of the evolution is on enhancements to the packet-switched (PS) domain of legacy UMTS system.

The main objectives of the evolution are to further improve service provisioning and reduce user and operator costs as already mentioned. More specifically, some key performance, capability and deployment requirements for the long-term evolution (LTE) are inter alia:
- significantly higher data rates compared to HSDPA and HSUPA (envisioned are target peak data rates of more than 100Mbps over the downlink and 50Mbps over the uplink),
- high data rates with wide-area coverage,
- significantly reduced latency in the user plane in the interest of improving the performance of higher layer protocols (for example, TCP) as well as reducing the delay associated with control plane procedures (for instance, session setup), and
- stand-alone system operation in spectrum allocations of different sizes ranging from 1.25 MHz to 20 MHz.

One other deployment-related requirement for the long-term evolution study is to allow for a smooth migration to these technologies.

### Current and LTE UTRAN Architecture

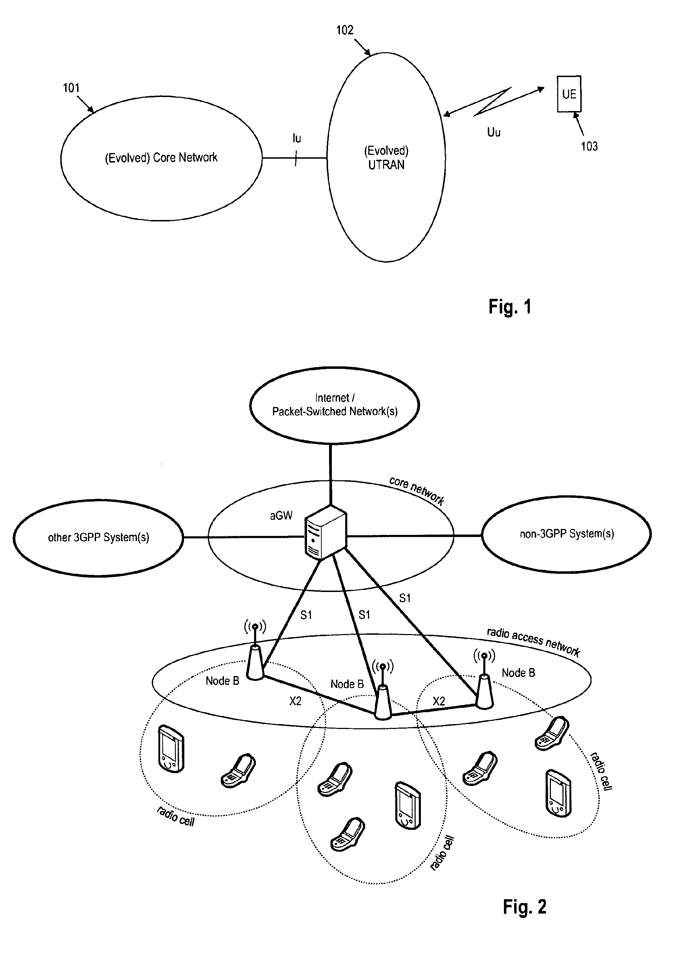

The high level Release 99/4/5/6 architecture of the Universal Mobile Telecommunication System (UMTS) is shown in Fig. 1 (see 3GPP TS 25.401: "UTRAN Overall Description", incorporated herein by reference, available from http://www.3gpp.org). The UMTS system consists of a number of network elements each having a defined function. Though the network elements are defined by their respective function, a similar physical implementation of the network elements is common but not mandatory.
The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of CN/UTRAN and UTRAN/UE are defined by open interfaces (Iu, Uu respectively). It should be noted that UMTS system is modular and it is therefore possible to have several network elements of the same type.
In the sequel, two different architectures will be discussed. They are defined with respect to logical distribution of functions across network elements. In actual network deployment, each architecture may have different physical realizations meaning that two or more network elements may be combined into a single physical node.

Fig. 2 illustrates an exemplary overview of a 3GPP LTE mobile communication network. The network consists of different network entities that are functionally grouped into the Core Network (CN), the Radio Access Network (RAN) and the User Equipments (UEs) or mobile terminals. The RAN is responsible for handling all radio-related functionality inter alia including scheduling of radio resources. The CN may be responsible for routing calls and data connections to external networks.

The LTE network is a "two node architecture" consisting of Access Gateways (aGW) and Node Bs (also referred to as enhanced Node Bs, eNode Bs or eNBs). The aGW will handle CN functions, i.e. routing calls and data connections to external networks, and also implement RAN functions. Thus, the aGW may be considered as to combine some of the functions performed by SGSN and RNC in today's 3G networks and RAN functions as for example header compression, ciphering/integrity protection. The Node Bs may handle functions as for example Radio Resource Control (RRC), segmentation/concatenation, scheduling and allocation of resources, multiplexing and physical layer functions.
A mobile communication network is typically modular, and it is therefore possible to have several network entities of the same type. The interconnections of network elements are defined by open interfaces. UEs can connect to a Node Bs via the air interface denoted as Uu interface. The Node Bs may have a connection to an aGW via the so-called S1 interface. The Node Bs are interconnected via the so-called X2 interface.
Both 3GPP and Non-3GPP integration may be handled via the aGW's interface to the external packet data networks (e.g. Internet).
As already indicated above, in the exemplary network architecture of Fig. 2, it is assumed that the ownership of the cell resources is handled in each Node B. Having the cell resource ownership outside the aGW makes it possible to support pooling of aGW (of both CP / UP flows), allowing one Node B to be connected to several aGWs for different terminals (thus avoiding a single point of failure).

### LTE Node Architecture

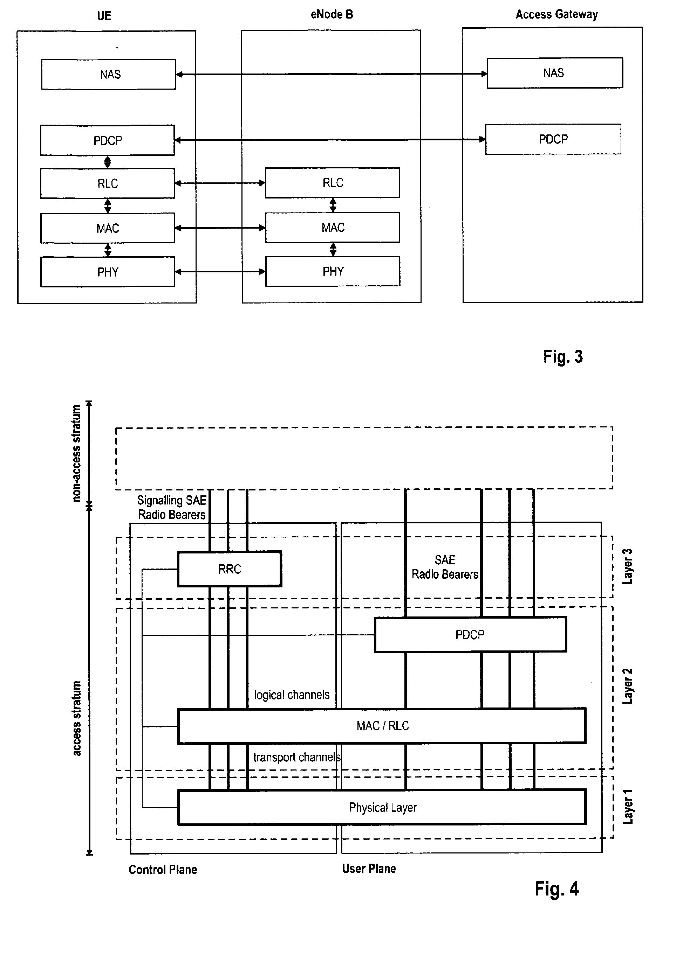

Fig. 3 shows an exemplary user-plane protocol stack in an LTE-based UTRAN. Layer 2 may be split in Medium Access Control (MAC), Radio Link Control (RLC) and Packet Data Convergence Protocol (PDCP) sublayers, wherein the RLC sublayer is terminated in eNode B at network side. The PDCP layer and NAS layer are terminated in the Access Gateway at network side. The S1-C interface between the aGW and the eNode B forms the Transport Network Layer together with a MAC and a Physical layer specifically adapted to the transport medium between the entities.
The major part of the control signaling between a mobile node (MN or also referred to as User Equipment UE) and the Core Network is done by Radio Resource Control (RRC) messages. The RRC protocol is located in Layer 3 and provides functions for UE specific signaling, paging of idle mode UEs and system information broadcast. The RRC layer also supports retransmission function to assure the correct transmission of control information from higher layers.
In summary, Fig. 3 shows the radio interface protocol stack architecture for E-UTRA Control Plane. An explanation of the content of the relevant functions is given in the proceeding text.
- RLC and MAC sublayers (terminated in eNB on the network side) perform the same functions as for the user plane;
- RRC (terminated in eNB on the network side) performs the functions listed below, e.g.:
   - Broadcast;
   - Paging;
   - RRC connection management;
   - RB control;
   - Mobility functions; and
   - UE measurement reporting and control.
- PDCP sublayer (terminated in aGW on the network side) performs for the control plane the functions listed below, e.g.:
   - Integrity Protection; and
   - Ciphering.
- NAS (terminated in aGW on the network side) performs among other things:
   - SAE bearer management;
   - Authentication;
   - Idle mode mobility handling;
   - Paging origination in LTE_IDLE; and
   - Security control for the signalling between aGW and UE, and for the user plane.

### UTRA Radio Interface Protocol architecture

An overview of the radio interface protocol architecture of the UTRAN is shown in Fig. 4. Generally, the radio interface protocol architecture of the UTRAN implements Layers 1 to 3 of the OSI protocol stack. The protocols terminated in the UTRAN are also referred to as the access stratum protocols. In contrast to the access stratum, all protocols not terminated in the UTRAN are typically referred to as the non-access stratum protocols.
The vertical split of the protocols into user plane and control plane is highlighted in Fig. 4. The Radio Resource Control (RRC) protocol is a Layer 3 protocol of the control plane which controls the protocols in the lower layers of the UTRA Radio Interface (Uu).
The RRC protocol is typically terminated in the RNC of the UTRAN nowadays, however, other network elements have also been considered for terminating the RRC protocol in the UTRAN, e.g. the Node Bs, as discussed with respect to the presently discussed LTE architecture. The RRC protocol for LTE (so called E-RRC protocol) is terminated in the Node Bs. The RRC protocol is used for signaling of control information to control access to radio resources of the radio interface to the UEs. Further, there is also the possibility that the RRC protocol encapsulates and transports non-access stratum messages, which are usually related to control within the non-access stratum.
In the control plane, the RRC protocol relays the control information to Layer 2, i.e. the Radio Link Control (RLC) protocol, via Signaling SAE Radio Bearers through Service Access Points (SAPs). In the user plane the non-access stratum protocol entities may use SAE Radio Bearers to directly access Layer 2 via SAPs. The access may be made to the RLC directly or to the Packed Data Convergence Protocol which in turn provides its PDUs to the RLC protocol entity.
The RLC offers services to the higher layers through its SAPs. The RRC configuration defines how RLC will handle the packets, e.g. whether RLC is operating in transparent, acknowledged or unacknowledged mode. The service provided to the higher layers in the control plane and user plane by the RRC or PDCP are also referred to as Signaling SAE Radio Bearer and SAE Radio Bearer, respectively.
The MAC/RLC layer in turn offers its services to the RRC layer by means of so-called logical channels. The logical channels essentially define what kind of data is transported. The physical layer offers its services to the MAC/RLC layer, the so-called transport channels. The transport channels define how and with which characteristics the data received from the MAC layer is transmitted via the physical channels.

### (Broadcast) System Information Structure

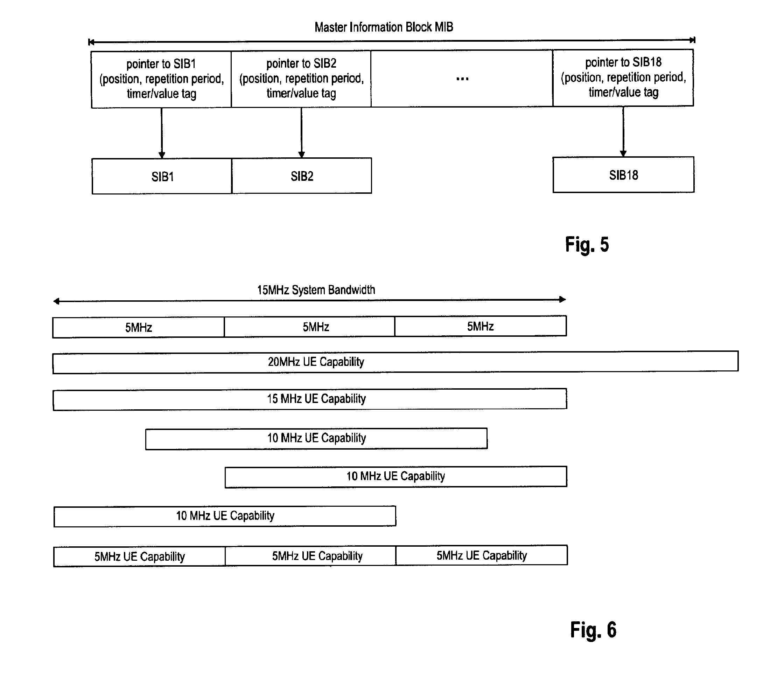

In the 3GPP terminology, (broadcast) system information is also denoted BCCH information, i.e. it denotes the information carried on the Broadcast Control CHannel (being a logical channel) of the radio cell to which the UE is connected (active state) or attached (idle state). The structure of the information on the BCCH is shown in Fig. 5. Generally, system information includes a master information block (MIB) and several system information blocks (SIBs). MIB contains control information on each System Information Block. The control information associated to a respective SIB may have the following structure. Respective control information associated to a SIB may indicate the position of the SIB on a transport channel (e.g. position in the time-frequency plane for OFDM radio access, i.e. particular Resource Blocks being assigned for transmission of a respective SIB) on which it is transmitted relative to common timing reference. Further, a repetition period of SIB may be indicated. This repetition period indicates the periodicity at which the respective SIB is transmitted. The control information may also include a timer value for timer-based update mechanism or, alternatively, a value tag for a tag-based update of the SIB information.
The table below shows an overview of the categorization and types of system information blocks in a UMTS legacy system as defined in 3GPP TS 25.331, "Radio Resource Control (RRC)", version 6.7.0, section 8.1.1, incorporated herein by reference; available at http://www.3gpp.org). The classification of the system broadcast information into the different SIBs is based on the content and temporal variability that is indicated on the third column of the table.

**Table 1**

| **SIB** | **Content** | **Temporal Variability** |
|---|---|---|
| SIB1 | NAS info, UE timers/counters | low |
| SIB2 | URA identity | low |
| SIB3 | Cell selection parameters | low |
| SIB4 | Cell selection par. for connected mode | low |
| SIB5 | Common physical channels configuration | medium |
| SIB6 | Common physical channels configuration | medium |
| SIB7 | Interference/ dynamic persistence level | high |
| SIB11 | Measurement control | medium |
| SIB12 | Measurement control information for connected mode | medium |
| SIB13 | ANSI-41 info | low |
| SIB14 | Outer loop power control information | medium |
| SIB15 | Positioning information | low |
| SIB16 | Preconfiguration | medium |
| SIB17 | Configuration of shared physical channels in connected mode | high |
| SIB18 | PLMN IDs of neighbouring cells | low |

### Long Term Evolution (LTE) Requirements

According to 3GPP TR 25.913, "Requirements for Evolved UTRA (E-UTRA) and Evolved UTRAN (E-UTRAN)", version 7.3.0 (available at http://www.3gpp.org and incorporated herein by reference) the Evolved UMTS Terrestrial Radio Access (E-UTRA) shall operate in spectrum allocations of different sizes, including 1.25 MHz, 2.5 MHz, 5 MHz, 10 MHz, 15 MHz and 20 MHz in both uplink and downlink. In addition, E-UTRA shall be possible to operate standalone, i.e. there is no need for any other carrier to be available for signaling support from another system.

3GPP TR 25.913 also mainly aims to significantly reduce control-plane latency, which is one of the main objectives as indicated above. This implies that transition time between the different operating states of a UE shall be (excluding downlink paging delay and Non Access Stratum signaling delay) less than 100 ms from a camped state (e.g. the UMTS Release 6 Idle Mode or LTE_Idle state or mode) to an active state (e.g. UMTS Release 6 CELL_DCH state or LTE_Active state or mode) in such a way that the user plane is established for the UE.

Generally, a UE is said to be camped on a cell (or attached to it) if the UE is in LTE idle mode, has completed the cell selection/reselection process and has chosen a cell. In this camped state the UE monitors transport channel configured to transmit system information and (in most cases) paging information channels. In LTE_Active state, Signalling SAE Radio Bearers are established for the purpose of exchanging control information, and the UE receives User Plane information and may monitor transport channel configured to transmit system information.

### Spectrum Deployment, System Bandwidth and UE Capability

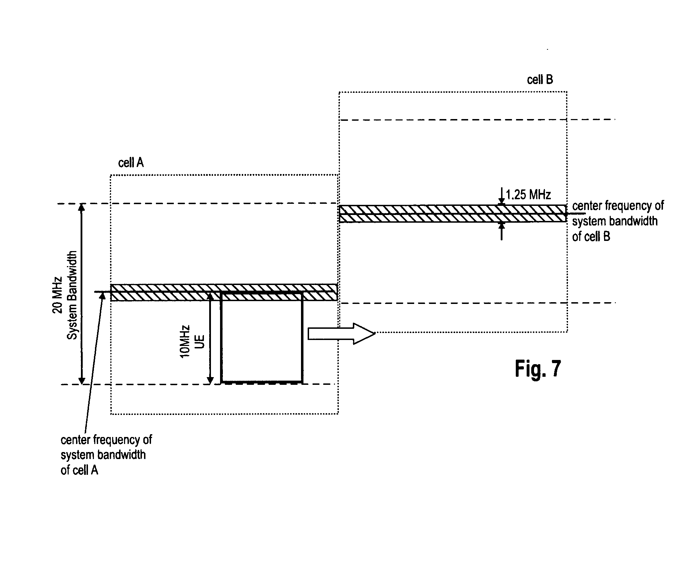

As explained above, E-UTRA should operate in a stand-alone manner in each of spectrum deployments. System bandwidth for different spectrum deployments may be equal to 1.25, 2.5, 5.0, 10.0, 15.0 and 20.0 MHz. However, for each of these system bandwidth sizes it is in turn possible to define several scenarios depending on actual position of UEs ("UE camping") with certain bandwidth capabilities in frequency domain in active mode or idle mode (referred to as LTE_Active mode and LTE_Idle mode for LTE 3GPP systems). According to current agreement in the stage II of LTE standardization, terminal bandwidth capability can be equal to at least 10 MHz. Fig. 6 illustrates exemplary deployment scenarios given the system bandwidth size of 15 MHz divided into three subbands of equal size and assuming terminal bandwidth capabilities equal to 5, 10 and 15 MHz without loosing generality of exposition.
According to current decision of TSG RAN WG1 (see 3GPP TR 25.814, "Physical Layer Aspects for Evolved UTRA", version 1.4.1 - available at http://www.3gpp.org and incorporated herein by reference), broadcast system information is transmitted in the central part of the system bandwidth. As illustrated in Fig. 7, if an LTE_Active UE is positioned in upper or lower part of the system bandwidth of radio cell A, it cannot decode the system information being broadcast in the central part of the system bandwidth of the radio cell B.

### Mobility Management - Interruption Time

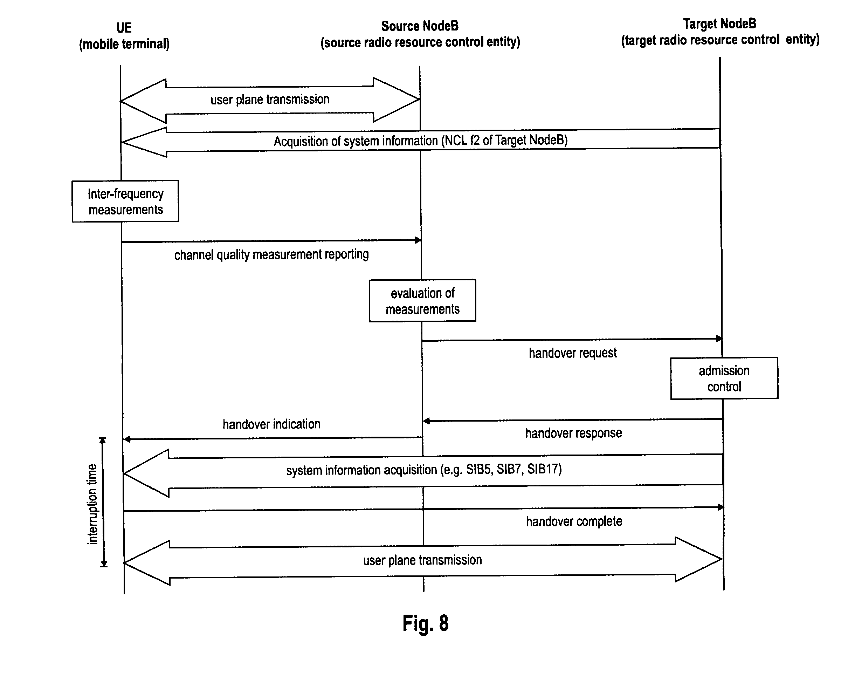

In LTE, intra-RAT (Radio Access Technology) mobility for terminals in active state or mode is realized by a Hard Handover procedure. Fig. 8 shows an exemplary Hard Handover procedure on the level of Layer 3 messages (in LTE: E-RRC protocol messages) and denotes corresponding interruption time resulting from the handover. The interruption time in which a UE has no connectivity (i.e. the time to detach from the source cell and to enter active mode in the target cell) is increased due to acquisition of system information (SIB5, SIB7 and SIB17) from the broadcast control channel of the target E-Node B.

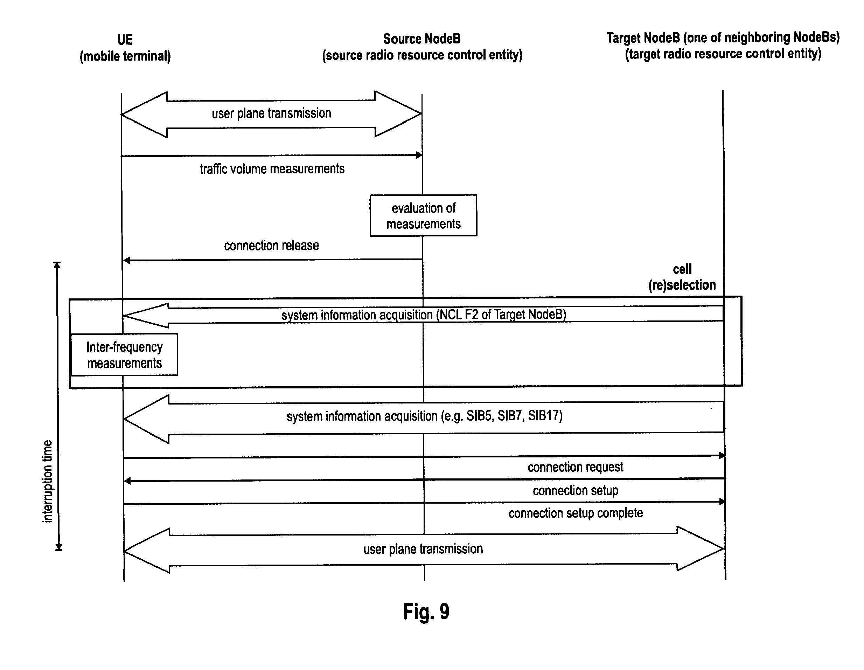

System information can be acquired only after reception of the [E-RRC] HANDOVER INDICATION message from the source NodeB. As the reception of the MIB containing scheduling information on the SIBs in the target cell is necessary to receive the relevant SIBs for system access and establishing Layer 3 connectivity, it would not be possible for the UE, attaching to the taget cell, to receive relevant system information (SIBs) before receiving the MIB. If the MIB was transmitted just slightly before receiving the [E-RRC] HANDOVER INDICATION, the UE would thus need to wait almost the entire repetition cycle of the MIB to receive same and subsequently to be able to receive the relevant SIBs for system access. This can result in increase of interruption time of app. 50 ms. Given the LTE requirement for control plane latency being less than 100 ms, this increase is significant.
Moreover, the time necessary for completing the entire handover procedure is also dependent on the acquisition of the Neighbouring cell list (NCL) from the target NodeB. Though a more detailed explanation will be given later, it should be briefly mentioned that the NCL is necessary for the mobile terminal to perform the inter-frequency measurements. Again, in order for the UE to access the NCL in the target cell, it has first to process the MIB transmitted from the Target NodeB, so as to know when and where to acquire the NCL. Only after receiving the NLC of the target cell, the UE is able to perform measurements in said target cell.
Another issue is the intra-RAT mobility for terminals in LTE_Idle mode. Typically, mobility management in this state is governed by a cell (re)selection procedure. Given the requirement for reduction of control plane latency and a general service-based requirement for reduction of interruption time, it is important to minimize latency in the state transition chain LTE_Active (source cell)→ LTE_Idle (source cell)→ LTE_Idle (target cell)→LTE_Active (target cell) of the E-RRC state machine.
Assuming that the second transition in the chain involves cell reselection, this translates into the requirement for reducing interruption time of the cell reselection procedure as shown in Fig. 9. There is a need of acquiring System Information only after reception of [E-RRC] E-RRC CONNECTION RELEASE message, similar to the case described above for the handover procedure, in which the System Information is acquired only after reception of the Handover Indication Message. Accordingly, the same requirements for reducing the interruption time holds for for mobility management (cell reselection procedure) for UEs in LTE_Idle state.

SIBs necessary for system access in the target cell in case of LTE Active mobility management (Hard Handover Procedure) may only be received upon having decoded the MIB of the target cell, so that the latency of the mobility procedures for UEs in active mode may be too high to meet the desired interruption time of approximately 100ms as defined for the LTE system. Similar considerations apply to the acquisition of the system information necessary for access to the target cell after cell (re)selection.
From above considerations and assuming that information necessary for configuration of inter-frequency cell measurements is transmitted on "Neighbouring Cell List" which essentially forms a part of he system information, it can be further concluded that the acquisition of specific system information is necessary for triggering LTE_Active mobility procedure (Handover) or for evaluating candidate cells during the cell reselection process. It is finally obvious that timely acquisition of said system information during the cell reselection procedure will reduce interruption time.

### SUMMARY OF THE INVENTION

An object of the invention is to suggest a mechanism for overcoming at least one of the problems outlined above. A more specific object of the invention is to suggest improvements to current acquisition procedures for system information so as to reduce the necessary time implied by the procedures.
At least one of the objects is solved by the subject matter of the independent claims. Advantageous embodiments of the invention are subject matters of the dependent claims.

According to an aspect of the invention, the mobile terminal is provided beforehand with the necessary information (pointer) for acquiring the system information of another cell. This comprises that the base station, that controls the cell in which the mobile terminal is currently located, transmits to the mobile terminal at least one pointer to the relevant system information of another cell. In other words, the mobile terminal gets to know from the base station of its current cell, when and where relevant system information is transmitted in a future cell, before it actually becomes connected to said next cell while executing hard handover procedure or before becoming attached to it while executing cell reselection procedure. Naturally, the advantage gained thereby is that the MIB of the target cell is not necessary for the acquisition of the relevant system information, which saves time and resources.

In one embodiment, the pointer may indicate scheduling information of target cell-specific system information broadcast/transmitted in the target cell. In another embodiment of the invention the pointer points to system information in the target cell that is required for system access to the target cell and/or mobility procedures, such as for example handover or cell reselection.

Another aspect of the invention is to broadcast the scheduling information (pointer) to system information of another cell on the broadcast channel of the cell in which the terminal is currently located. In cases in which different frequency carriers are respectively used by different cells, this implies that the pointer is transmitted on a first frequency carrier which is used by the current cell of the mobile terminal. Further, the system information is transmitted/broadcast via a second frequency carrier belonging to a future cell. Consequently, as different frequencies are used the mobile terminal needs to perform regularly (or operator triggered) inter-frequency measurements on other frequencies than the one on which the mobile node is currently camped. In this regard, the pointer transmitted via the base station of the current cell directly points to the relevant system information (NCL) of the other cell, such that the mobile terminal, when switching to the other frequency carrier, is immediately enabled to receive/acquire the relevant system information.

Another aspect of the invention (that may be advantageously combined with the aspect of including a pointer to the control message) is to increase the flexibility of transmitting system information. According thereto, system information of a cell is transmitted via a fixed-rate transport channel and/or via a flexible-rate transport channel. Accordingly, the pointer transmitted to the mobile terminal in the source cell may indicate scheduling information, such as for example the transport format of the system information or of individual portions thereof, and/or an indication of the mapping of the system information or individual portions thereof to the fixed-rate transport channel and/or the flexible-rate transport channel.

One embodiment of the invention provides a method for informing a mobile terminal on system information of a second cell broadcast within the second cell. The mobile terminal is located in a first cell within a mobile communication system. At least one pointer to the system information of the second cell is transmitted from a base station of the first cell to the mobile terminal, while the mobile terminal is located in the first cell.

According to an advantageous embodiment of the invention, the system information of the second cell is broadcast on a second frequency carrier within the second cell. The base station of the first cell uses a first frequency carrier for communication and broadcasts on the first frequency carrier the at least one pointer to the system information broadcast on the second frequency carrier.

In a further embodiment of the invention he mobile terminal is listening to the first frequency carrier and receives the at least one pointer broadcast on the first frequency carrier. In addition, the at least one pointer directly points the mobile terminal to the system information broadcast on the second frequency carrier. Then, the mobile terminal acquires the system information on the second frequency carrier using the received at least one pointer.

Another embodiment relates to the fact that the system information is broadcast in form of at least one system information block.

Regarding a different embodiment of the invention, the at least one pointer is broadcast on a first broadcast transport channel of the first frequency carrier, and the system information is broadcast on a second broadcast transport channel of the second frequency carrier.

According to another embodiment of the invention, the first and second broadcast transport channels respectively comprise a fixed-rate and a flexible-rate broadcast transport channel. Accordingly, the system information is broadcast on the second fixed-rate and/or the second flexible-rate broadcast transport channel.

In an advantageous embodiment of the invention the at least one pointer is broadcast on the first fixed-rate and/or the first flexible-rate broadcast transport channel.

In relation to another embodiment of the invention, the system information is information necessary for performing inter-frequency measurements by the mobile terminal.

According to still another embodiment of the invention, the system information relates to a neighbouring cell list of the second frequency carrier.

Regarding a further alternative embodiment of the invention, the system information is necessary for performing a mobility procedure by the mobile terminal.

In an additional embodiment of the invention the mobility procedure includes changing connectivity or point of attachment from a source cell to a target cell. Also, the at least one pointer is transmitted via the first frequency carrier in the source cell. The system information is target cell-specific system information and is transmitted via the second frequency carrier in the target cell.

According to a further embodiment of the invention, the first frequency carrier is used by a first base station for communication with mobile terminals, and the second frequency carrier is used by a second base station for communication with mobile terminals. The at least one pointer to the system information broadcast on the second frequency carrier is transmitted from the second base station to the first base station.

In another embodiment of the invention the at least one pointer is transmitted from the second base station to the first base station either periodically, or after the at least one pointer has changed in the second base station, or after receiving in the second base station a request for the at least one pointer from the first base station.

Regarding a more advantageous embodiment of the invention, particular system information belonging to a particular frequency carrier is broadcast only on said particular frequency carrier, wherein the particular frequency carrier is one of the plurality of frequency carriers. Further, at least one particular pointer to said particular system information is broadcast on each of the plurality of frequency carriers of the mobile communication system.

According to a more specific embodiment of the invention, at least one acquisition gap in data transmission streams of the mobile terminal is assigned to the mobile terminal by the mobile communication system. In particular, said at least one acquisition gap is used by the mobile terminal to acquire the system information on the second frequency carrier using the received at least one pointer.

In another embodiment of the invention the system information broadcast on the second frequency carrier relates to a neighbouring cell list. Furthermore, a first part of the neighbouring cell list applies to mobile terminals in a connected state, and a second part of the neighbouring cell list applies to mobile terminals in an idle state. In such a case, the at least one pointer to the neighbouring cell list broadcast on the first frequency carrier is separated into a first part for the first part of the neighbouring cell list applying to mobile terminals in the connected state, and a second part for the second part of the neighbouring cell list applying to mobile terminals in the idle state. This allows a greater flexibility regarding the transmission, repetition, load and acquisition times of the pointer in the source cell.

According to an alternative embodiment of the inventioin, the system information broadcast on the second frequency carrier relates to a neighbouring cell list. Then, a first part of the neighbouring cell list supports low data rates, and a second part of the neighbouring cell list supports high data rates. In that case, the at least one pointer to the neighbouring cell list broadcast on the first frequency carrier is separated into a first part for the first part of the neighbouring cell list supporting low data rates, and a second part for the second part of the neighbouring cell list supporting high data rates.

In a different embodiment of the invention the mobile communication system is timely unsynchronized. Is this the case, synchronization information from the second frequency carrier is acquired by the mobile terminal for synchronizing the mobile terminal to the transmission timing of the second frequency carrier.

In a more specific embodiment of the invention the synchronization information is a system frame number, which is broadcast on a fixed-rate broadcast transport channel of the second cell.

Another embodiment of the invention provides a base station for informing a mobile terminal on system information of a second cell broadcast within the second cell, wherein the mobile terminal is located in a first cell of a mobile communication system. A transmitter in the base station transmits to the mobile terminal at least one pointer to the system information of the second cell, while the mobile terminal is located in the first cell.

According to another embodiment of the invention, the system information of the second cell is broadcast on a second frequency carrier within the second cell, and the base station of the first cell uses a first frequency carrier for communication. More specifically, the transmitter of the base station broadcasts on the first frequency carrier the at least one pointer to the system information broadcast on the second frequency carrier.

In some embodiments of the invention the base station uses the first and second frequency carriers for communication with mobile terminals.

Regarding a more specific embodiment of the invention, the transmitter of the base station broadcasts the at least one pointer on a first broadcast transport channel of the first frequency carrier. Also, the transmitter broadcasts the system information on a second broadcast transport channel of the second frequency carrier, wherein the first and second broadcast transport channels respectively comprise a fixed-rate and a flexible-rate broadcast transport channel. The transmitter of the base station further broadcasts the system information on the second fixed-rate and/or the second flexible-rate broadcast transport channel. In addition, the transmitter broadcasts the at least one pointer on the first fixed-rate and/or first flexible-rate broadcast transport channel.

Another embodiment of the invention relates to the fact that the first and second frequency carriers are respectively one of a plurality of frequency carriers used in a hierarchical cell structure of the mobile communication system. Thus, the transmitter is further adapted to broadcast on each of the plurality of frequency carriers at least one particular pointer to particular system information, that is broadcast only on a particular frequency carrier.

In another embodiment of the invention the base station uses the first frequency carrier for communication with mobile terminals, and a second base station uses the second frequency carrier for communication with the mobile terminals. A receiver receives from the second base station the at least one pointer to the system information broadcast on the second frequency carrier of the base station.

A more specific embodiment of the invention requests that the transmitter transmits a request to the second base station for the at least one pointer. Then, the receiver receives either periodically, or after the at least one pointer has changed in the second base station, or in response to the transmitted request, the at least one pointer from the second base station.

According to a more detailed embodiment of the invention, a processor assigns to the mobile terminal at least one acquisition gap in data transmission streams of the mobile terminal. In particular, said at least one acquisition gap is used by the mobile terminal to acquire the system information on the second frequency carrier using the received at least one pointer. Accordingly, the transmitter is adapted to transmit to the mobile terminal information about the assignment of the at least one acquisition gap.

In a more advantageous embodiment of the invention the system information relates to a neighbouring cell list. Accordingly, a first part of the neighbouring cell list may apply to mobile terminals in a connected state, and a second part of the neighbouring cell list may apply to mobile terminals in an idle state. In said case, the transmitter broadcasts on the first frequency carrier a first part of the at least one pointer to the first part of the neighbouring cell list applying to mobile terminals in the connected state. Also, the transmitter broadcasts a second part of the at least one pointer to the second part of the neighbouring cell list applying to mobile terminals in the idle state.

Regarding a more specific embodiment of the invention, the system information relates to a neighbouring cell list, and a first part of the neighbouring cell list supports low data rates, and a second part of the neighbouring cell list supports high data rates. Then, the transmitter broadcasts on the first frequency carrier a first part of the at least one pointer to the first part of neighbouring cell list supporting low data rates. Additionally, the transmitter broadcasts a second part of the at least one pointer to the second part of the neighbouring cell list supporting high data rates.

One embodiment of the invention provides a mobile terminal, being located in a first cell, for communicating within a mobile communication system, wherein system information of a second cell is broadcast within the second cell. A receiver receives from a base station of the first cell at least one pointer to the system information broadcast within the second cell, while the mobile terminal is located in the first cell.

In a more advantageous embodiment of the invention the system information is broadcast on a second frequency carrier within the second cell, and the base station of the first cell uses a first frequency carrier for communication. Furthermore, the receiver receives from the base station on the first frequency carrier the at least one pointer to the system information broadcast on the second frequency carrier.

According to another embodiment of the invention, the mobile terminal is listening to the first frequency carrier, and the at least one pointer directly points to the system information broadcast on the second frequency carrier. Therefore, the receiver acquires the system information on the second frequency carrier using the received at least one pointer.

Another embodiment of the invention relates to the fact that the mobile communication system assigns to the mobile terminal at least one acquisition gap in data transmissions of the mobile terminal. The receiver further receives information on the assignment of the at least one acquisition gap. Then, the receiver acquires the system information on the second frequency carrier using the received at least one pointer inside the acquisition gap.

According to a different embodiment of the invention, the mobile communication system is timely unsynchronized and the receiver acquires synchronization information from the second frequency carrier for synchronizing the mobile terminal to the transmission timing of the second frequency carrier.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS according to UMTS R99/4/5,
- **Fig. 2**: shows an exemplary architecture of the UTRAN according to 3GPP LTE study project,
- **Fig. 3 and 4**: show an overview of the radio interface protocol architecture of the UTRAN,
- **Fig. 5**: shows the structure of a Master Information Block (MIB),
- **Fig. 6**: shows exemplary deployment scenarios given the system bandwidth size of 15 MHz divided into three subbands of equal size and assuming terminal bandwidth capabilities equal to 5, 10 and 15 MHz,
- **Fig. 7**: shows the camping of a 10 MHz UE in a communication system having 20MHz system bandwidth, wherein two radio cells have different center frequencies, and the fixed-rate broadcast channel is provided around the center frequency of the system,
- **Fig. 8**: shows an exemplary hard handover procedure according to UMTS,
- **Fig. 9**: shows an exemplary cell reselection procedure according to UMTS,
- **Fig. 10**: shows an exemplary structure of MIB and SIBs on a broadcast transport channel using the MIB structure of Fig. 5,
- **Fig. 11**: shows the concept of broadcasting a pointer to target cell-specific system information via the source cell according to an exemplary embodiment of the invention wherein system information is mapped to a fixed-rate and flexible-rate transport channel,
- **Fig. 12**: illustrates a usual NCL acquisition, wherein the system information is mapped to a fixed-rate and flexible-rate transport channel,
- **Fig. 13**: exemplifies the overall concept of the hierarchical cell structure, in which three frequency carriers are simultaneously employed for a certain area,
- **Fig. 14**: illustrates the concept of the Compressed Mode used for performing inter-frequency measurements and/or NCL aquisition,
- **Fig. 15**: shows the pattern sequence and parameters for the Compressed Mode,
- **Fig. 16**: illustrates the concept of transmitting the pointer to target cell-specific system information of the target cell via the source cell according to one embodiment of the invention,
- **Fig. 17a**: shows a diagram with terminal measurement gaps, NCL transmission times and resulting acquisition gaps for one embodiment of the invention,
- **Fig. 17b**: shows another diagram with terminal measurement gaps, NCL transmission times and resulting acquisition gaps for a different embodiment of the invention,
- **Fig. 18**: shows the concept of broadcasting a pointer to target cell-specific system information via the source cell according to another exemplary embodiment of the invention, wherein an associated control channel is used for the flexible-rate transport channel in the context of Layer 1 outband signaling,
- **Fig. 19**: shows an exemplary format of a MIB including a pointer indicating the mapping of system information blocks to a fixed-rate and flexible-rate transport channel when Layer 1 outband signaling as shown in Fig. 18 is used according to an embodiment of the invention,
- **Fig. 20**: shows a concept of broadcasting a pointer to target cell-specific system information via the source cell according to another exemplary embodiment of the invention wherein system information is mapped to a fixed-rate and flexible-rate transport channel, and Layer 2 inband signaling is used,
- **Fig. 21**: shows an exemplary format of a MIB including a pointer indicating the mapping of system information blocks to a fixed-rate and flexible-rate transport channel when Layer 2 inband signaling as shown in Fig. 20 is used according to an embodiment of the invention,
- **Fig. 22**: shows a concept of broadcasting a pointer to target cell-specific system information via the source cell according to another exemplary embodiment of the invention wherein a portion of the system information is simultaneously transmitted on different resource blocks,
- **Fig. 23**: shows a concept of broadcasting a pointer to target cell-specific system information via the source cell according to another exemplary embodiment of the invention wherein a portion of the system information is included in the broadcasted pointer,
- **Fig. 24**: shows the maintenance of a neighbouring cell list according to an exemplary embodiment, wherein the neighbouring cell list comprises cells for which a respective pointer to cell-specific system information is to be broadcast to the mobile terminal via the source cell,
- **Fig. 25**: shows a concept of broadcasting two separate pointers to target cell-specific system information via the source cell according to another exemplary embodiment of the invention, wherein the target cell-specific system information is separated based on the current state of the terminal,
- **Fig. 26**: shows a concept of broadcasting two separate pointers to target cell-specific system information via the source cell according to another exemplary embodiment of the invention, wherein the target cell-specific system information is separated based on the cell bandwidth capability,
- **Fig. 27**: shows a diagram with terminal measurement gaps, NCL transmission times and resulting acquisition gaps according to another embodiment of the invention, and
- **Fig. 28**: illustrates the interactions in the UE between its Layer 3 entity and its Layer 1 entity for performing inter-frequency measurements in the target cell.

### DETAILED DESCRIPTION

The following paragraphs will describe various embodiments of the invention. For exemplary purposes only, most of the embodiments are outlined in relation to a 3GPP-LTE communication system according to the discussion in the Background Art section above and later on. It should be noted that the invention may be advantageously used for example in connection with a mobile communication system such as the 3GPP-LTE communication system, but the invention is not limited to its use in this particular exemplary communication network.

The explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

### Definitions

In the following a definition of several terms frequently used in this document will be provided.

A **mobile node** is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

System information may be understood as information specific to a particular cell or information common for several cells, which is necessary to be acquired by mobile nodes in order to e.g. attach/connect to the particular cell, or to perform measurements in said cell, etc.

As previously outlined, one aspect of the invention is to suggest an improvement in the acquisition of system information from another cell, which minimizes the delay of e.g. hard handover or cell reselection procedures. In correspondence therewith, it is proposed to broadcast a pointer to said system information of a possible target cell (controlled by a target base station) from the source cell (controlled by a source base station), in which the mobile terminal is currently located.

According to one embodiment of the invention, the pointer is transmitted from the source base station to the mobile terminal through the source radio cell. The pointer directly points the mobile terminal to target cell-specific system information. For instance, for the cell reselection case there may be one or plural pointers that point the mobile terminal to target cell-specific system information in a respective target cell out of potential target cells. These potential target cells are typically at least one of the radio cells neighbouring the source cell. By pointing the mobile terminal to the target cell-specific system information in a (potential) target cell, the mobile terminal may be enabled to receive the cell-specific system information in the target cell upon attaching to the target cell, without requiring a prior reception through the target cell of a pointer (or pointers) to the target cell-specific system information.

The pointer may include a collection of control information in a modular way as present in the MIB of the target cell (e.g. position of a SIB on a transport channel used, that is, position in the time-frequency plane relative to the common timing reference, repetition period, timer value and value tag) being applicable to at least a portion of the target cell-specific system information (e.g. at least one SIB).

In one embodiment the cell-specific system information in the target cell contains system information for establishing connectivity on the air interface of the target cell or information relevant for changing a point of attachment to the target cell. For example, this relevant system information may be information on the common physical channel configuration in the target cell and/or information on the configuration of flexible-rate or shared physical channels used for transmission of system information in the target cell. Optionally, the relevant system information may further comprise information on the uplink interference in the target cell.

Alternatively, relevant system information may also be information on the cell reselection parameters in the target cell and/or information on the interference in the target cell. In this alternative and optionally, the relevant system information may further comprise information on the common physical channel configuration in the target cell.

In a more specific example, the relevant system information may be the following information. Please note, that depending on whether a handover procedure or a cell reselection procedure is performed, different combinations of the information outlined below are considered relevant for establishing connectivity on the air interface of the target cell or information relevant for changing a point of attachment to the target cell. Each of the portions of the system information listed below may be comprised in individual system information blocks.

One important portion of the system information are cell selection parameters. These parameters that may be especially relevant for cell reselection may comprise cell identity, cell selection and reselection info (e.g. cell selection and reselection quality measure), access restriction info, etc. of the potential radio cells to which a mobile terminal may attach. Using the exemplary categorization as shown in Table 1 above, this information may be for example comprised in the system information block SIB3.

Another relevant portion of the system information for performing mobility procedures is the common physical channel configuration of a potential target cell. This information may be especially relevant in the handover case but may also be useful for the cell reselection case. The common physical channel configuration may for example comprise information on the paging channel configuration comprising, a paging channel, allocation of resource blocks in time-frequency plane, modulation and coding scheme used and also configuration of RACH (Random Access Channel) channels in time frequency plane (e.g. assignment of access slots). Using the exemplary categorization as shown in Table 1 above, this information may be for example comprised in the system information block SIB5.

A further relevant portion of the system information may be information on the uplink interference of a cell, which may be for example of interest for cell reselection. This information may be relevant, as it may avoid additional delays due to back-off in random access procedure. The uplink interference information may comprise uplink interference information for each of the random access channels defined in the time-frequency plane. Using the exemplary categorization as shown in Table 1 above, this information may be for example comprised in the system information block SIB7.

Another relevant portion of the system information could be information on the configuration of shared physical channels in connected mode. Of particular relevance could be its information in uplink and downlink SCH (Shared CHannel) and its associated L1/L2 (Layer 1/Layer 2) control channel. The associated L1/L2 control channel typically may carry scheduling information for downlink data transmission, scheduling grant for uplink data transmission and ACK/NACK for uplink data transmission. More specifically, configuration of respective channels may comprise allocation of resource blocks in time-frequency plane, and modulation and coding scheme used. Using the exemplary categorization as shown in Table 1 above, this information may be for example comprised in the system information block SIB17.

In one embodiment of the invention the individual types of system information may be categorized in system information blocks. Hence, if the pointed target cell-specific system information is communicated separately in individual system information blocks, the pointer may point to each of the system information blocks.

In another embodiment, the target cell-specific system information is data of a broadcast control logical channel, such as for example the BCCH in a 3GPP-based system and is subject to broadcasting to all terminals within the respective cell. The target cell-specific system information may thus be one or more system information blocks of the broadcast control logical channel of a target cell. In one embodiment of the invention, the system information blocks may be mapped to a single broadcast (transport) channel for transmission within the radio cells. In another embodiment, the system information blocks are mapped to plural transport channels, for example to a fixed-rate transport channel and/or a flexible-rate transport channel. The fixed-rate transport channel may also be denoted a fixed-rate broadcast channel or primary broadcast channel, while flexible-rate transport channel may also be denoted a variable-rate broadcast channel, secondary broadcast channel or dynamic broadcast channel. In other words, the fixed-rate transport channel may thus be also considered a 'fixed-rate part' of a broadcast logical channel, while the flexible-rate transport channel may be also considered a 'flexible-rate part' of a broadcast logical channel.

As will be explained further down below in more detail, according to one embodiment of the invention, the individual system information blocks (or portions of the target cell-specific system information) may be mapped to either one of the fixed-rate transport channel and the flexible-rate transport channel or to both of them. Further, in another embodiment one or more system information blocks (or portions of the target cell-specific system information) may be simultaneously transmitted on different radio resources of the target cell.

The mapping of system information blocks to a flexible- and/or fixed-rate transport channel can be advantageous in that the acquisition of this information by mobile terminals in terms of terminal processing time and power consumption may be optimized. Other advantages that may be achieved is an improved reading time for broadcast system information of mobile terminals for all sizes of standalone spectrum allocations, greater flexibility of operators in configuring transport channels for broadcast and increased scheduling efficiency of system information, which may be a result from mapping system information to a variable rate transport channel.

Generally, a pointer broadcast on a channel of the source cell may contain information on the scheduling of at least one system information block (or portion of the target cell-specific system information). In case a system information block (or a portion of the target cell-specific system information) is mapped to the flexible-rate transport channel, the pointer may for example indicate a transmission format (e.g. position in time-frequency plane, i.e. exact Resource Blocks assigned, modulation and coding scheme used; DTX - discontinuous transmission is also possible) and timing of a respective system information block (or portion of the target cell-specific system information) on the flexible-rate transport channel. In case a system information block (or a portion of the target cell-specific system information) is mapped to the fixed-rate transport channel, the pointer may specify the position of the respective system information block on the fixed-rate transport channel (e.g. position in time-frequency plane, i.e. exact Resource Blocks assigned) and optionally the timing based on which the respective system information block is transmitted relative to common timing reference under the target cell. Finally, in both cases the pointer may include the SFN (system frame number, common unit of the cell's timing reference) starting from which the information is valid, though in case the SFN is not valid anymore, the current SFN would have to be acquired from the broadcast information of the target cell. Furthermore, if a mapping of the system information blocks (or target cell-specific system information) to more than one transport channel is foreseen, a pointer may also include an indication of the transport channel type to which a respective system information block (or a portion of the target cell-specific system information) is mapped.

It should be noted that transmission of relevant system information on flexible-rate part of a broadcast channel may enable more flexible implementation of scheduling of related system information blocks in the target cell. However, the invention is not limited to transmission of relevant system information on flexible-rate part of the broadcast channel (such as BCH) of the target cell only. Implementations of the invention, where only the fixed-rate part of a broadcast channel is used may also be foreseen.

Furthermore, transmission on flexible-rate transport channels may also be denoted 'flexible-rate transmissions' or 'variable-rate transmissions' (accordingly, the flexible-rate transport channel could also be denoted as a variable-rate transport channel).

According to one exemplary embodiment related to implementing the invention in a 3GPP based communication system, flexible-rate transmissions of system information may be realized by transmission on DL-SCH Transport Channel or a BCH Transport Channel having flexible transport format. Similarly, 'fixed-rate transmissions' could for example be realized by transmission on a BCH Transport Channel having a fixed transport format for system information.

The concept of "flexible BCH" has been introduced to support fast and efficient delivery of system information in scenarios with scalable spectrum allocations due to following technical reasons:
- **Allocation of radio resources to BCCH for different spectrum allocations:** Stand-alone operation of E-UTRA should be possible in each of the scalable spectrum allocations. In order to keep the overhead constant relative to the bandwidth for user plane traffic, one possible solution is that BCCH is transmitted with a rate depending on the size of the used spectrum allocation. This would mean, for example, 30 kbps BCCH for 10 MHz spectrum allocation would be scaled down to 3.75 kbps in 1.25 MHz spectrum allocation. However, this would be too small for minimum BCCH information. Another possible solution would be to increase the minimum SIB repetition cycle, but in such a case, acquisition times of SlBs with high repetition rate are affected. For example, in UTRA increase of acquisition time of SIB7 may lead to the increase of call setup latency. Similar problems can be expected for E-UTRA.
- **Different capacity requirements for BCCH depending on deployment, optional SIBs and extensions:**
   The capacity requirements of BCCH may be also different among PLMNs or even cells. For example, the necessity of other cell/RAT info depends upon operator's choice or geographical location of a cell. It is also not always necessary to transmit SIBs for an optional feature (e.g. positioning).

There are also following two issues for continuous slow rate transmission of BCCH:
- **Increased battery power consumption of UE:**
   Slow continuous rate transmission requires the UE to wake up for a relatively long time to obtain BCCH contents. This is especially critical in RRC_Idle states. Therefore, non-continuous bursty like transmission of BCCH is useful for UE battery power saving. This in turn will allow different network vendors or operators to define BCCH transmission patterns that may be more efficient for UE power consumption.
- **Reception of neighbour cell's BCCH contents in short measurement gap:** Although it needs to be discussed whether UE is required to receive neighbour cell's BCCH contents in LTE_Active states, if it is required, slow continuous rate transmission of BCCH makes it difficult to obtain neighbouring cell's BCCH contents in a short measurement gap period. Therefore, non-continuous bursty transmission of BCCH is useful.

Another aspect of the invention relates to the interchange of the pointers to cell-specific system information between radio resource control entities (base stations) within the communication system. This may be for example advantageous in cases where no static configuration for the transmission of the system information in the cells (known to respective neighbouring radio resource control entities) is used. According to this aspect, base stations, typically of neighbouring cells, may inform each other on the pointer (e.g. the scheduling information and/or mapping of relevant system information) pointing cell-specific system information in the cell of the reporting entity.

Accordingly, a synchronized control protocol procedure for sending this information has to be defined over the X2 interface. The signaling of the information (pointer or pointers) may be for example transmitted periodically, that is the source NodeB transmits said information to the target NodeB each x ms. Alternatively, the exchange may be based on a request-response mechanism, that is, when the source NodeB is required to do so by the target NodeB(s). Another possibility relates to the exchange being event-triggered, i.e. initiated by a radio resource control entity, e.g. in response to a change in the mapping of system information or a change of the transmission format and/or timing of the system information. Apparently, it is important to synchronize the change of system information of the target NodeB with the change of pointing information via the source cell.

As there may be several mobility procedures defined in the system, such as handover or cell reselection, the radio resource control entity may signal a respective pointer to system information relevant for a respective mobility procedure (of course if the same system information is relevant for several mobility procedures only one pointer may be signaled). In an exemplary embodiment of the invention relating to the implementation of this aspect in a 3GPP based communication network, a source Node B may be informed of scheduling of SIBs relevant to one or more mobility procedures from one or more of its neighbouring Node Bs. As indicated above, the scheduling of the SIBs may use a static transport format and/or a static mapping to transport channel may be used. This may be for example configured as a part of overall operation and maintenance (O&M). Alternatively, the scheduling and/or the mapping may be also dynamic and may be signaled via the X2 interface (see Fig. 2) among the Node Bs by means of a frame or application protocol.

Before elaborating on the concepts of the invention according to different exemplary embodiments in further detail below, the structure of the system information (e.g. transmitted on the broadcast control channel (BCCH) - a logical channel ) according to one exemplary embodiment of the invention is outlined in further detail with reference to Fig. 5. The structure of the information may be tree-like. A so-called master information block (MIB) forms the root of the tree structure, whereas the so-called system information blocks (SIBs) represent its branches. The MIB information may be transmitted less or more frequently than the SIBs carrying the broadcast system information. The information in the MIB may also not need to be read by the individual terminals each time the MIB information is transmitted. For exemplary purposes it may be assumed that the system information is mapped to a single broadcast transport channel in this embodiment.

One part of MIB may for example be reserved for information on each system information block. The control information associated to a respective SIB and comprised in the reserved parts may have the following structure. Each control information associated to a SIB and being included in the MIB's pointer may indicate the position of the respective SIB on the broadcast transport channel (fixed- or flexible-rate transport channel) on which it is transmitted relative to common timing reference. Further, a repetition period of SIB may be indicated. This repetition period indicates the periodicity at which the respective SIB is transmitted. The control information may further include a timer value for timer-based update mechanism or, alternatively, a value tag for tag-based update mechanism of the SIB information.

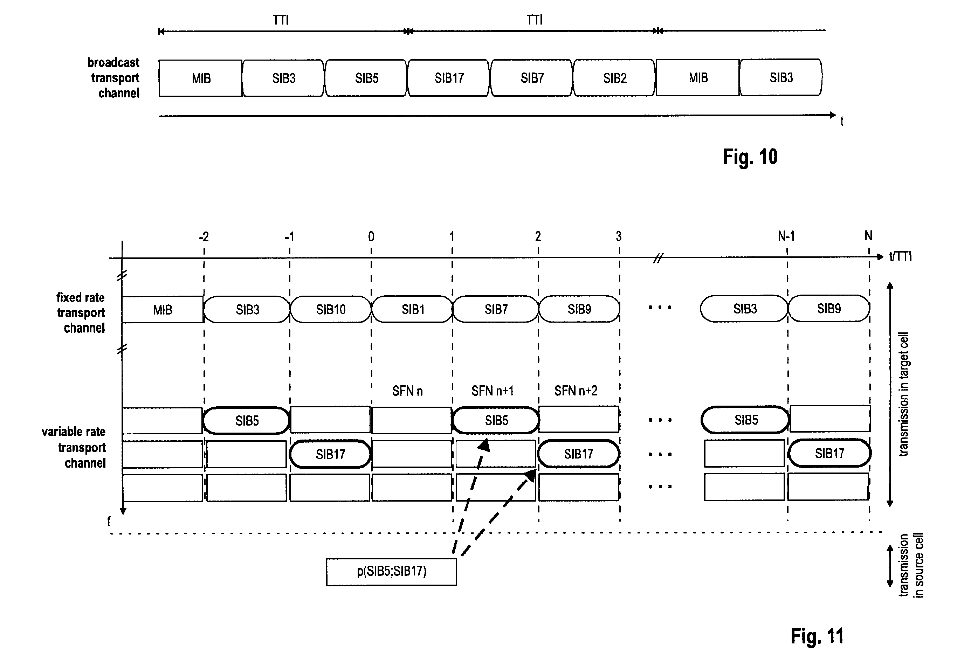

Using this exemplary structure of the MIB and logical-to-transport channel mapping of the SIBs in the target cell, an exemplary broadcast transport channel structure could look like shown in Fig. 10. The mobile terminal performs a mobility procedure to attach or connect to the target cell having this channel structure, wherein the pointer previously received from the source base station, comprises control information indicating the transport format and relative timing of relevant system information for the mobility procedure. For instance, if the relevant system information would be included in SIB5 and SIB17 for a handover procedure, the previously broadcast pointer may point the mobile terminal to these SIBs in the target cell, so that the mobile terminal may receive these SIBs upon attachment to the target cell without receiving the MIB first (e.g. when the mobile terminal attaches to the target cell after the MIB has been broadcast in the target cell).

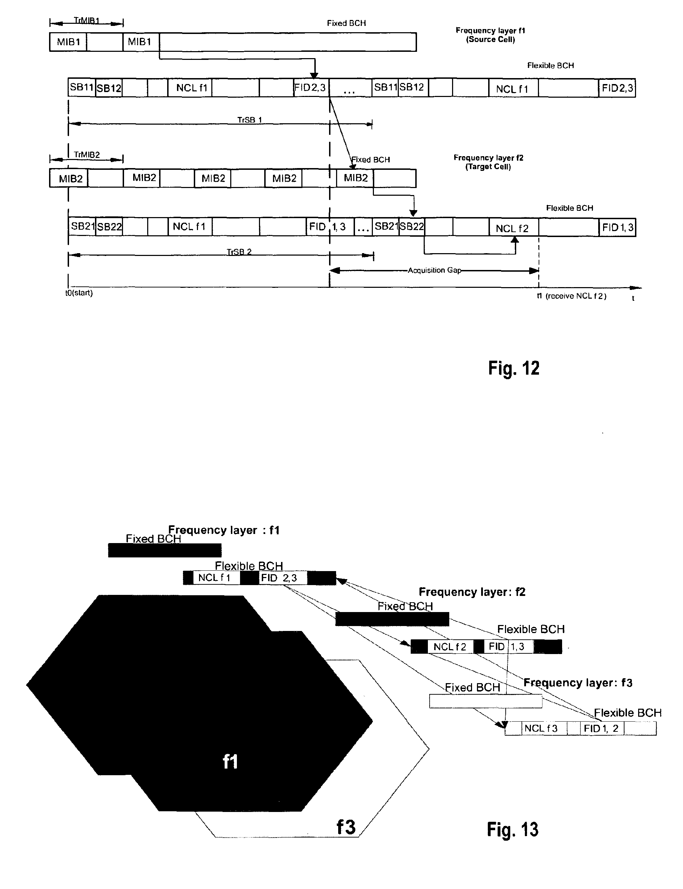

Next, another exemplary embodiment of the invention is described, where the system information is mapped to one of or both of a fixed-rate and/or flexible-rate transport channel. Fig. 11 shows the concept of transmitting a pointer to target cell-specific system information via the source cell according to an exemplary embodiment of the invention wherein system information is mapped to a fixed-rate and flexible-rate transport channel. For exemplary purposes it may be assumed in this embodiment that the categorization of the broadcast system information in system information blocks (SIBs) as suggested in Table 1 is used. The contents of Table 1 above however should be only considered as one possible example of the contents and classification of the broadcast system information. Also the classification of the frequency at which the different portions of the system information is broadcast and its classification into the different SIBs is intended to serve only for exemplary purposes and is not intended to limit the invention to this example. It is recognized that in the ongoing development and improvement of existing mobile communication systems, the content, format, periodicity of transmission, etc. may change, as well as the distribution of system information on the different SlBs.

Further, it may also be assumed for exemplary purposes only that the system information is mapped to a fixed-rate transport channel and/or a flexible-rate transport channel within the target cell. On the fixed-rate transport channel a MIB is periodically transmitted that may include a control information identifying the mapping of the SIBs to the fixed-rate transport channel and/or a flexible-rate transport channel and their transmission format and/or timing (if not static or preconfigured). For exemplary purposes the flexible-rate transport channel may be assumed to use as predetermined bandwidth of the overall system bandwidth in the frequency domain. This channel bandwidth may be separated in plural subbands or subcarriers in the frequency domain as exemplified in Fig. 11. In the time domain, the air interface resources of the flexible-rate transport channel may be divided in individual sub-frames. Each sub-frame may be assigned a system frame number (SFN) indicating a sub-frame's relative position in the time domain.

A subband or subcarrier in the time domain and a sub-frame in the time domain form a resource block which may be the smallest unit of air interface resources that can be allocated to a user. Of course the definition of a resource block is flexible, e.g. a resource block may also span one or more subbands/subcarriers in the frequency domain and/or one or more sub-frames in the time domain. Furthermore, it may be assumed for exemplary purposes that the length of a transmission time interval (TTI) is equivalent to the length of a sub-frame in the time domain - of course a TTI may alternatively span multiple sub-frames.

As explained previously, in a conventional system the mobile terminal attaching to a new radio cell (target cell) would need to receive the MIB on the fixed rate transport channel first, so as to derive therefrom the mapping and transport format and/or timing of the SIBs within the target cell. Only with this control information, the mobile terminal is able to receive the SlBs including also those SlBs relevant for performing mobility procedures such as handover or cell reselection.

For instance, if the control message, be it the handover indication message or the connection release message indicating to attach/connect to the target cell (see Fig. 8 and 9) is received at a time instance (e.g 0) after the MIB has been sent in the target cell, the mobile terminal would need to wait for the next MIB before being able to receive SIBs relevant for performing the mobility procedure. According to this embodiment of the invention, the pointer, transmitted previously in the source cell, points at the SIBs relevant for performing the mobility procedure - which are SIB5 and SIB17 in this example. Though the MIB has been missed in the target cell, the pointer informs the mobile terminal on the mapping, timing and transport format of SIB5 and SIB7 in the target cell, so that upon attachment to the target cell the mobile terminal can immediately receive these SlBs and may continue the mobility procedure without having to first receive the next MIB in the target cell.

Before elaborating on further advantages provided by the embodiments of the invention when applied to the hard-handover procedure and cell reselection procedure, a detailed discussion on the mechanism of the inter-frequency measurements of mobile terminals is given first.

In UMTS most operators may have two or three FDD frequencies available to increase capacity and revenue. For instance, the operation can be started using one frequency and the second and third frequency are needed later to enhance the capacity. Several frequencies can be used on the same sites to achieve high capacity, or they can be used as macro and micro cell layers using different frequencies. In particular, scenarios in which the base stations are capable of supporting multiple frequencies are called Hierarchical Cell Structures (HCS) in UMTS. Accordingly, the cells with different frequencies would be arranged in hierarchical structures with varying numbers of Macro and/or Micro Layer cells (micro cells are small cells whereas the cell that covers a big area is known as Macro cell). HCS supports larger cell sizes for smaller velocities and smaller cell sizes for larger velocities. Those set of cells having the same size form one layer of the HCS. For instance, there may be a scenario in which there are two identical layers of Macro cells, and the network can decide which frequency layer the UE should camp on, depending on the corresponding loads. Conversely, Micro cells may be additionally provided in "hot spots", where there is extremely high traffic compared to other areas. Fig. 13 exemplifies the simultaneous presence of multiple frequency carriers, in this case f1 - f3. It is further assumed according to the figure, that each frequency carrier uses a fixed-rate and flexible-rate broadcast transport channel for providing inter alia broadcast information. Also, intra-frequency NCL is transmitted on each frequency layer as well as a Frequency IDentifier (FID) to the remaining frequency carriers, being the other layers of HCS. Scheduling Information is shared between the fixed BCH and the flexible BCH for each of the frequency layers of the HCS in the following exemplary way:
- Master Information Block (MIB) contains scheduling information for Scheduling Blocks (SBs) of the flexible BCH.
- One (or more) of the SBs contain scheduling information upon NCL information transmission on the flexible BCH.
- The repetition rate of MIB is equal to 20 ms. As the NCL information does not change very often, the repetition rate of SB, pointing to the NCL, is several times larger.

It should be noted that scheduling information in the SB and FID are transmitted on approximately 20b of the same cell. Furthermore, given the repetition rate of the SB for NCL, acquisition delay can be as large as 80 ms.

It is further possible and in this case left open, whether the frequency carriers are all controlled by a single base station or whether each frequency carrier is used by a separate base station.

Due to the use of different frequencies, inter-frequency handovers between different frequency carriers are needed to support these scenarios, wherein inter-frequency measurement is further used therein. Also, compressed mode is employed for measurements in the inter-frequency handover in similar ways as in the inter-system handovers, the compressed mode being discussed in detail later. In addition, the UE uses the same WCDMA synchronization procedure as for intra-frequency measurement to identify the target frequency.

The inter-frequency handover can be divided into 4 phases:
- Phase-1: RNC (base station) commands the UE to start inter-frequency measurements with compressed mode. The trigger for measurement is RAN vendor specific.
- Phase-2: The UE finds P-SCH peaks.
- Phase-3: The UE identifies the cell with S-SCH and CPICH and reports measurements to RNC.
- Phase-4: RNC sends handover command to the UE.

The cell identification time depends mainly on the number of cells and multipath components that the UE can receive, in the same way as with intra-frequency handovers. In particular, the UE typically uses a matched filter to find the primary synchronization channel, P-SCH, of the neighbouring cells. All cells transmit the same synchronization code that the UE seeks. The UE further identifies the cells with secondary synchronization channel, S-SCH and pilot channel, CPICH. After the synchronization procedure, the UE is able to make measurements, e.g. inter-frequency measurements, and identify to which cell the measurement results belong.

Inter-frequency measurements are typically initiated only when there is a need to make a corresponding inter-frequency handover. Inter-frequency handovers are needed to balance loading between different carriers and cell layers, and to extend the coverage area if the other frequency does not have continuous coverage.

The inter-frequency measurement reports to the network can contain the following elements:
- cell identity;
- SFN-SNF observed time difference;
- Cell synchronisation information;
- Downlink Ec/No (FDD);
- Downlink pathloss;
- Downlink RSCP (Received Signal Code Power) (primary CPICH FDD, PCCPCH TDD);
- Downlink timeslot ISCP (TDD);
- Proposed TGSN (TDD); and
- UTRA carrier RSSI.

The network decides that inter-frequency measurements need to be performed and sends the MEASUREMENT CONTROL MESSAGE, including Measurement type set to Inter-frequency, to the mobile terminal. Generally, it will set an Event as well along with the measurements. The following events trigger a measurement report:
- 2A-Change of best frequency;
- 2B-The estimated quality of the currently used frequency is below a threshold, and the estimated quality of a non-used frequency is above a threshold;
- 2C-The estimated quality of a non-used frequency is above a certain threshold;
- 2D-The estimated quality of currently used frequency is below a certain threshold;
- 2E-The estimated quality of a non-used frequency is below a certain threshold;
- 2F-The estimated quality of the currently used frequency is above a certain threshold.

The most commonly used events from the above list are events 2b and 2d. In case when UE enters "End of coverage" area, the network will send the Measurement Control Message with event ID set to event 2b and 2d. Event 2d performs the same function as event 2b for the current frequency but the threshold set in case of 2d is much lower. When event 2b is triggered, a handover to a new frequency is performed without any problems. In case event 2b is not triggered while event 2d is triggered, that means that the other frequency is not strong enough but that the current frequency has deteriorated very much, and the only option is to handover to new frequency. In said case, the results definitely will not be a success.

The compressed mode, also referred to as slotted mode, is needed when making measurements on another frequency (inter-frequency) or on a different radio access technology (inter-RAT) if the UE has only one receiver. Compressed Mode is not necessary, if the UE has a second receiver, since it can make measurements on that receiver while continuing with the transmission/reception via the first receiver. However, this does not happen in practice as the cost for the UEs would be too high. The UE capabilities define whether a UE requires compressed mode in order to monitor cells on other FDD frequencies and on other modes and radio access technologies.

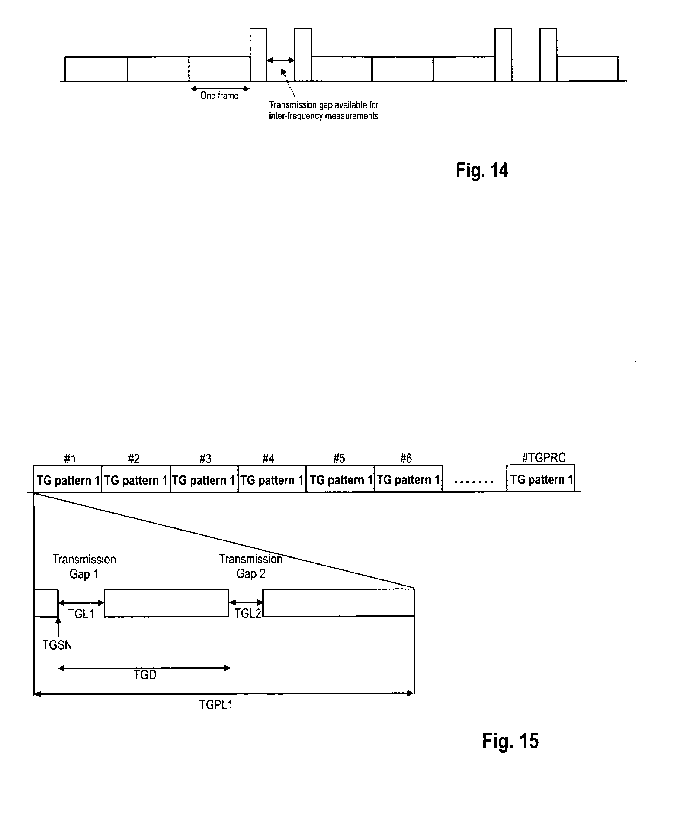

In the Compressed Mode the transmissions and receptions from the UE are stopped for a short time in the order of a few milliseconds, and the measurements are performed on other frequency or RAT in that time. That is, the mechanism of Compressed Mode allows an artificial gap to be inserted in the uplink or downlink or in both directions of the transmissions paths, wherein the UE is able to re-tune its receiver and perform measurement on other neighbouring cells. This is depicted in Fig. 14, which gives an idea of how the frame is compressed for performing measurements. The instantaneous transmit power is increased in the compressed frame in order to keep the quality (BER, FER, etc.) unaffected by the reduced processing gain.

After that time is over, the UE can tune its receiver back to the current service cell carrier frequency and continue with the transmission and reception of data. The intention of using the Compressed Mode is not to lose data but to compress the data transmission in the time domain. Accordingly, frame compression can be achieved with three different methods:
- Lowering the data rate from higher layers, as higher layers have knowledge of the Compressed Mode schedule for the UE,
- Increasing the data rate by changing the spreading factor, or
- Reducing the symbol rate by puncturing the data bits at the physical layer.

What frames are compressed, and how and to which extent is decided by the network. In response to a request from higher layers (e.g. RRC layer), the UTRAN may signal the compressed mode parameters to the UE. A transmission gap pattern sequence consists of consecutive occurrences of transmission gap pattern 1, where transmission gap pattern 1 consists of one or two transmission gaps. The basic concept of the compressed mode pattern sequence and parameters (e.g. TGPL1, TGSN) is illustrated in Fig. 15.

The following parameters characterize a transmission gap pattern, as depicted in Fig. 15:
- TGSN (Transmission Gap Starting Slot Number): A transmission gap pattern begins in a radio frame, henceforward called first radio frame of the transmission gap pattern, containing at least one transmission gap slot. The TGSN is the slot number of the first transmission gap slot within the radio frame of the transmission gap pattern.
- TGL1 (Transmission Gap Length 1): This is the duration of the first transmission gap within the transmission gap pattern, expressed in number of slots.
- TGL2: This is the duration of the second transmission hap within the transmission gap pattern, expressed in number of slots. If this parameter is not explicitly set by a higher layer, then TGL2 = TGL1.
- TGD (Transmission Gap start Distance): This is the duration between the starting slots of the two consecutive transmission gaps within a transmission gap pattern, expressed in number of slots.
- TGPL1 (Transmission Gap Pattern Length): This is the duration of transmission gap pattern 1, expressed in number of frames.

Naturally, there are additional parameters, e.g. TGPRC, TGCFN, that have to be set, however, a further discussion thereon is omitted.

The UE needs to support one compressed mode pattern sequence for each measurement purpose. In UMTS there are six types of Transmission Gap pattern sequence Measurement Purposes (TGMP), namely:
1. TDD measurement,
2. FDD measurement
3. GSM carrier RSSI,
4. GSM initial BSIC identification,
5. GSM BSIC re-conformation, and
6. Multi-carrier measurement.

TGPS_IDENTITY is the variable that the UE uses to store the configuration parameters of all the configured compressed mode transmission gap pattern sequences.

The contents in the TGPS_IDENTITY variable is illustrated below. The configuration parameters of the transmission gap pattern sequence stored in the TGP_IDENTITY variable are set based on the content of the Information Element (IE) "DPCH compressed mode info". Upon the UE has established an RRC connection, the IE "DPCH compressed mode info" in IE "Downlink information common for all radio links" may be set in the Radio Bearer Control message (e.g. PHYSICAL CHANNEL RECONFIGURATION) by UTRAN and may be signaled to the UE. Whereas for MEASUREMENT CONTROL message, an IE "DPCH Compressed Mode Status Info" is used to act as a control parameter to activate/deactivate the assigned transmission gap pattern sequence to the UE. From the above discussion, the transmission gap pattern sequence can be considered fixed for each measurement purpose while the MEASUREMENT CONTROL message only controls the starting frame for each gap sequence.

| TGPS_IDENTITY |
|---|
| \|→ TGPSI = 1; |
| \|→ TGPS_Status_Flag = activate; (activate, deactivate); |
| \|→ Current_TGPS_Status_Flag = active; (active, inactive); |
| \|→ TGCFN = 12; (CV-Active) |
| \|→ Transmission_gap_pattern_sequene_configuration_parameters |
| \|→ TGMP = FDD measurement; |
| \|→ TGPRC = 200; |
| \|→ TGSN = 1; |
| \|→ TGL1 = 3; |
| \|→ TGL2 = 3; |
| \|→ TGPL1 = 5; |
| \|→ ... |

CELL_INFO_LIST and MEASUREMENT_IDENTITY are the variables that the UE uses to store the measurement related information.

CELL_INFO_LIST contains a list used to define the cells employed for the three basic types of cell signal measurement-intra-frequency cell, inter-frequency cell and inter-RAT cell measurements. For each of the three measurement types, the variable CELL_INFO_LIST can store information on up to 32 cells. Different cells are differentiated by their unique cell lds as shown below.

| CELL_INFO_LIST |
|---|
| \|→ Intra_Fraquency_Cell_Info_List |
| \| \|→ Intra_Fraquency_Cell_ID = 0, Primary_Scrambling_Code = 162, ... |
| \| \|→ Intra_Frequency_Cell_ID = 1, Primary_Scrambling_Code = 163, ... |
| \| \|→ ... |
| \|→ Inter_Frequency_Cell_Info_List |
| \| \|→ Inter_Frequency_Cell_ID = 0, UARFCN_uplink = 13; UARFCN_donwlink = 323, ... |
| \| \|→ Inter_Frequency_Cell_ID = 1, UARFCN_uplink = 43; UARFCN_downlink = 143, ... |
| \| \|→ ... |
| \|→ Inter_RAT_Cell_Info_List |
| \|→ Inter_RAT_Cell_ID = 0, Radio_Access_Technology=GSM; Cell_Individual_Offset=-10 (dB), ... |
| \|→ Inter_RAT_Cell_ID = 1, Radio_Access_Technology=IS-2000; System_Specific_Measurement_Info, ... |
| \|→ ... |

The variable MEASUREMENT_IDENTITY stores additional information that defines the quantities to be measured, the quantities to be reported, and when and how they should be reported. Roughly speaking, it stores some of all of the IEs in the MEASUREMENT_CONTROL message, SIB11 message and/or SIB12 message. The information that is stored, when it is stored, and when it is cleared may be defined by the RRC protocol and is dependent on the specific state that the UE is in at a given time. Different measurements are identified by the measurement ID, and several measurements are controlled as shown below.

| MEASUREMENT_IDENTITY_1: |
|---|
| \|→ Intra_Frequency_Measurement |
| \|→ Intra_Fraquency_Cell_Info_List: |
| \| \|→ Intra_Fraquency_Cell_ID = 0, Primary_Scrambling_Code = 162, ... |
| \| \|→ Intra_Frequency_Cell_ID = 1, Primary_Scrambling_Code = 163, ... |
| \| \|→ ... |
| \|→ Intra_Frquency_Measurement_Quantity = FDD, CPICH Ec/No, |
| \|→ Intra_Frequency_Reporting_Criteria = Event 1a, Event 1b, Event 1c; |
| \|→ Intra_Frequency_Measurement_Reporting_Mode = AM RLC. Event_Trigger; |
| \|→ ... |

| MEASUREMENT_IDENTITY_2: |
|---|
| \|→ Inter_Frequency_Measurement |
| \|→ Inter_Fraquency_Cell_Info_List: |
| \| \|→ Inter_Frequency_Cell_ID = 0, UARFCN_uplink = 13; UARFCN_donwlink = 323, ... |
| \| \|→ Inter_Frequency_Cell_ID = 1, UARFCN_uplink = 43; UARFCN_downlink = 143, ... |
| \|→ ... |
| \|→ Inter_Frequency_Measurement_Quantity = FDD, CPICH RSCP; UTRA carrier RSSI; |
| \|→ Inter_Frequency_Reporting_Criteria = Event 2a, Event 2b, Event 2c; |
| \|→ Inter_Frequency_Measurement_Reporting_Mode = AM RLC, Event_Trigger; |
| \|→ ... |

In summary, CELL_INFO_LIST contains general information about the neighbouring cells while MEASUREMENT_IDENTITY maintains all the necessary parameters used for performing one or more specific measurement tasks. Furthermore, some fields in the MEASUREMENT_IDENTITY are the same as that in the CELL_INFO_LIST and hence can be initialized via reading the CELL_INFO_LIST variable.

As already mentioned, the UE configures its measurement variables according to its current states. When the UE is in the IDLE state, it reads the IEs in the broadcast SIB11 message of the potential target cell. When the UE is in CELL_FACH/CELL_PCH/URA_PCH, it reads the IEs in the SIB12 message broadcast in another cell. If SIB12 is not present, then the UE uses the contents of SIB11 instead. The contents of the SIB12 message are virtually the same except for the first field, i.e., the SIB indicator is not present.

| SIB11 |
|---|
| \|→SB12_Indicator |
| \|→FACH_Measurement_Occasion_Information |
| \|→Measurement_Control_System_Information |
| \| \|→Use_of_HCS = used; (used or not used) |
| \| \|→Cell_Selection_and_Reselection_Criteria =CPICH Ec/Nb; (CPICH Ec/Nb or RSCP) |
| \| \|→Intra_Fraquency_Cell_Info_List |
| \| \| \|→Intra_Fraquency_Cell_ID = 0 Primary_Scrambling_Code = 162,... |
| \| \| \|→Intra_Frequency_Cell_ID = 1, Primary_Scrambling_Code = 163,... |
| \| \| \|→... |
| \| \|→Inter_Fraquency_Cell_Info_List |
| \| \| \|→Inter_Frequency_Cell_ID = 0, UARFCN_uplink = 13; UARFCN_donwlink = 323, ... |
| \| \| \|→Inter_Frequency_Cell_ID = 1, UARFCN_uplink = 43; UARFCN_downlink = 143, ... |
| \| \| \|→ ... |
| \| \|→Inter_RAT_Cell_Info_List |
| \| \|→Inter_RAT_Cell_ID = 0, Radio_Access_Technology=GSM; Cell_Individual_Offset=10 (dB), ... |
| \| \|→Inter_RAT_Cell_ID = 1, Radio_Access_Technology=IS-2000; System_Specific_Measurement_Info, ... |
| \| \|→ ... |
| \|→Traffic_Volume_Measurement_System_Information |

The elements of SIB11 regarding cell (re) selection are used for internal configuration procedure of cell reselection. In the SIB11 message, the IE FACH Measurement Occasion Information defines the times when the UTRAN halts the downlink transmissions to the UE in the CELL_FACH state to allow them to make measurements on other cells on other frequencies. The IE Measurement Control System Information defines the measurements that the UE needs to make and is used to configure the CELL_INFO_LIST variable.

When the UE is in the CELL_DCH state, it reads the IEs in the MEASUREMENT CONTROL message sent via the downlink DCCH. The MEASUREMENT CONTROL message is used by the UTRAN whenever it decides to control the measurement procedure in a specific UE with configuration settings different from those used in the SIB11 and SIB12 message. This message can either establish new measurements, or reconfigure existing measurements. It can also activate the use of the compressed mode for the inter-frequency and the inter-RAT measurements. Upon receipt of this message, the UE reads/updates the information stored in the MEASUREMENT_IDENTITY variable. The lEs in the MEASUREMENT CONTROL message include measurement identity, measurement command, measurement reporting mode, measurement type, measurement reporting criteria, DPCH compressed mode status information and so on.

Note that one MEASUREMENT CONTROL message may contain only some of these IEs if other IEs have been configured by previous SIB11/12 or previous MEASUREMENT CONTROL message. For example, the first RRC MEASUREMENT CONTROL message contains the Intra-Frequency_Cell_Info_List while the second one contains the Measurement_Reporting_Criteria.

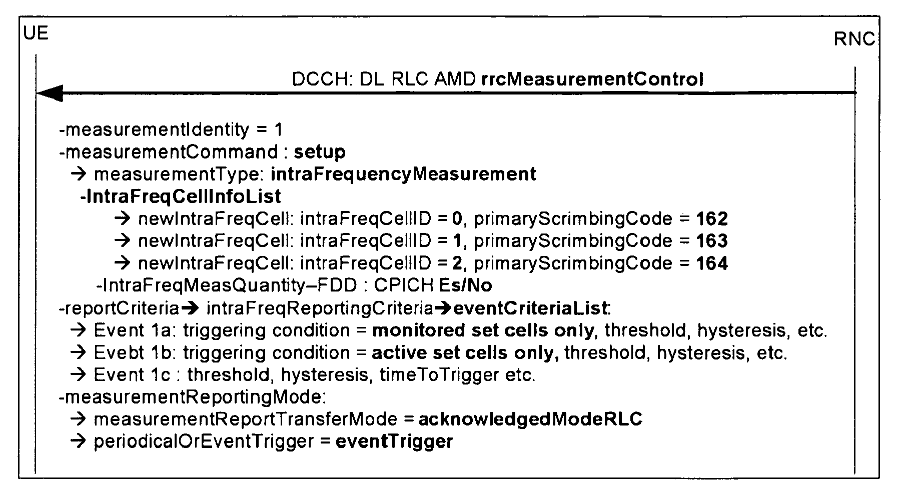

In order for the UE to perform inter-frequency measurements, it is necessary to acquire the Neighbouring Cell List (NCL) of the other cell, that is to be measured. Generally, it can be considered that the NCL consists of SIB11 and SIB12, whose usage and contents have been described in the previous sections.

With respect to the definitions of the elements of Neighbouring Cell List for the legacy system, following five cases are applicable. The total sum of the information element's sizes is calculated for five different cases presented in the following:
1. All possible parameters, optional and mandatory, are included in the SIBs (SIB11, SIB11bis, SIB12). The list of parameters is very extensive and thus omitted. Some of the parameters included in the SIBs are cell-specific (approx. 2000 bit) while most of them have to do with the neighbour list and are thus dependent on the number of neighbouring cells included in the list. The total size increases therefore linearly by approximately 445 bits per additional cell and per SIB (so, by 890 bit, taking SIBs 11 and 12 together).
   In the following three cases, the focus is on parameters related to inter-frequency measurement:
2. The SIB consists of all values, including optional ones, related to inter-frequency measurement, but no further information. This adds to a fixed part of 19 bits plus 132 bit for each cell in the list.
   Variable part, necessary per cell included in the list:
   - **Removed inter-frequency cells** - Inter-frequency cell id
   - **New inter-frequency cells** - Inter-frequency cell id
   - **Frequency info**
   - FDD - UARFCN uplink (Nu)
   - FDD - UARFCN downlink (Nd)
   - **Cell info**
   - Cell individual offset
   - CHOICE accuracy
   - No chips used in LTE, assuming 7 bits for accuracy
   - Read SFN indicator
   - Primary CPICH info: Primary scrambling code
   - Primary CPICH Tx power
   - TX Diversity Indicator
   - **Cell Selection and Re-selection Info**
   - Qoffset1s,n
   - Qoffset2s,n
   - Maximum allowed UL TX power
   - **HCS neighbouring cell information**
   - HCS_PRIO
   - Qhcs
   - DeltaQhcs-RSCP
   - HCS Cell Re-selection Information
   - Penalty_time
   - Temporary_offset1
   - Temporary_offset2
   - FDD: Qqualmin
   - FDD: Qrxlevmin
   - DeltaQrxievmin
   - **Cells for measurement -** Inter-frequency cell id
      Fixed part, necessary only once:
   - **Choice Inter-frequency cell removal** - selection "Remove some inter-frequency cells"
   - Inter-frequency RACH reporting information
   - FDD - Inter-frequency RACH reporting quantity
   - Inter-frequency RACH reporting threshold
   - Maximum number of inter-frequency RACH reporting cells
3. The SIB only consists of mandatory parameters related to inter-frequency measurement. As optional parameters, "inter-frequency cell info list" with the optional choice "new inter-frequency cells" are included because else there would be no data at all. This adds up to 27 bits per cell in the list.
   Necessary per cell included in the list:
   - **Inter-frequency cell info list -** New inter-frequency cells - Inter-frequency cell id
   - **Frequency info -** UARFCN downlink (Nd)
   - **Cell info**
   - Cell individual offset
   - Read SFN indicator
   - TX Diversity Indicator
4. Selected parameters considered relevant for inter-frequency measurement are grouped and comprise the SIB. They can be found in the following table and add up to 67 bit per cell.
   Summing up selected values:
   - Cell individual offset
   - Primary CPICH Tx power
   - Qoffset1s,n
   - Qoffset2s,n
   - Maximum allowed UL TX power
   - HCS_PRIO
   - Qhcs
   - DeltaQhcs-RSCP
   - Penalty_time
   - Temporary_offset1
   - Temporary_offset2
   - FDD: Qqualmin
   - FDD: Qrxlevmin
   - DeltaQrxlevmin
5. The fifth case takes into account SIB11 as well as SIB11bis. The additional information included in SIB11 bis, related to inter-frequency measurements (see below, 121 bit per cell), is added to case 2, resulting in a fixed part of 19 bit and a variable part of 253 bit per cell.
   - **Inter-frequency cell info list**
   - **New inter-frequency cells**
   - **Frequency Info**
   - FDD - UARFCN uplink (Nu)
   - FDD - UARFCN downlink (Nd)
   - Inter-frequency cell id
   - **Cell info**
   - Cell individual offset
   - Reference time difference to cell
   - CHOICE accuracy
   - no chips in LTE, assuming 7 bits for accuracy
   - Read SFN indicator
   - CHOICE mode - FDD only considered here
   - Primary CPICH info: Primary scrambling code
   - Primary CPICH Tx power
   - TX Diversity Indicator
   - **Cell Selection and Re-selection Info**
   - Qoffset1s,n
   - Qoffset2s,n
   - Maximum allowed UL TX power
   - **HCS neighbouring cell information**
   - HCS_PRIO
   - Qhcs
   - DeltaQhcs-RSCP
   - **HCS Cell Re-selection Information**
   - Penalty_time
   - Temporary_offset1
   - Temporary_offset2
   - FDD: Qqualmin
   - FDD: Qrxlevmin
   - DeltaQrxlevmin

A short summary of the extensive discussions above on inter-frequency measurements and related issues is following below.

Inter-frequency measurements are part of inter-frequency handovers and are needed to support scenarios in which radio cells use several (at least two) different frequency carriers. In order to configure those inter-frequency measurements on other frequencies it is necessary to first acquire the NCLs of the other frequencies, which may be SIB11 and/or SIB12. For the acquisition of the NCL as well as for the actual inter-frequency measurements, a compressed mode is applied, in which an artificial gap in the UE-transmissions is used to re-tune the receiver of the UE to the other frequencies and to either get the corresponding NCL and/or perform the necessary measurements. In conventional systems, the scheduling information necessary for acquiring the NCL of another frequency carrier is broadcast in the same cell of the another frequency carrier. Therefore, a UE that wants to receive the NCL has to first acquire the MIB, which contains the necessary information for guiding the UE to receive the NCL.

Fig 12 illustrates a conventional method to acquire NCL f2 from frequency carrier f2 of another cell, in order to configure the inter-frequency measurements of the UE. It is assumed that the UE is currently located in its source cell which uses the frequency carrier f1. Two additional cells are available which respectively use frequency carriers f2 and f3, wherein the UE wants to conduct measurements on frequency f2. In order for the UE to acquire NCL f2 it is necessary to first receive the FID 2, whose position on the flexible BCH is indicated by MIB1. Upon knowing the frequency of the frequency carrier f2, the UE uses the Compressed Mode to first acquire the MIB2 of the target cell. Only by processing the MIB2, the UE is able to determine where the necessary SBs, in this case SB22, is to be found on the flexible BCH of the target cell. In accordance therewith, the UE then receives SB22 and is consequently further directed to NCL f2. The acquisition time is defined as the time it takes the UE to acquire system information from another cell. That is, the acquisition time starts when the UE determines the other frequency value through FID2, and ends with the reception of NCL f2. Apparently, the acquisition may increase in cases where the MIB2 and/or SB22 have just been missed, and the UE has to thus wait for the following repetition of MIB2/SB22.

Next, two exemplary mobility procedures, a hard handover procedure and a cell reselection procedure according to exemplary embodiments of the invention will be described with reference to Fig. 8 and Fig. 9.

Fig. 8 shows a hard handover procedure as explained previously. However, now the improvements of the hard handover procedure according to one embodiment of the invention will be described in the following. For exemplary purposes, it is assumed that Node Bs act as radio resource control entities (base stations) in the respective cells.

According to one embodiment of the invention, the source NodeB broadcasts pointers to system information of other cells. In this example, illustrated with help of Fig. 8, the relevant system information of other cells, would be the NCL (SIB11, SIB12), and SIB5, 7 and 17. Corresponding scheduling information for said system information of the target cell may be broadcast either within one or several pointers and on fixed- and/or flexible-rate BCH of the source cell, along with system information for the source cell. In either case, the UE is thus furnished with all the necessary information to directly access the system information of the target cell. In cases more target cells are present, naturally more pointers are to be broadcast by the source NodeB. That is, for instance in case five cells compose a tracking area, the source NodeB has to transmit additional pointers for four cells, wherein each pointer may comprise the necessary information to directly acquire SIB5, 7, 11, 12 and 17 of the respective cell. In cases of large tracking areas, the soure NodeB may only broadcast pointers for neighbouring cells so as to reduce the traffic caused by said additional scheduling information.

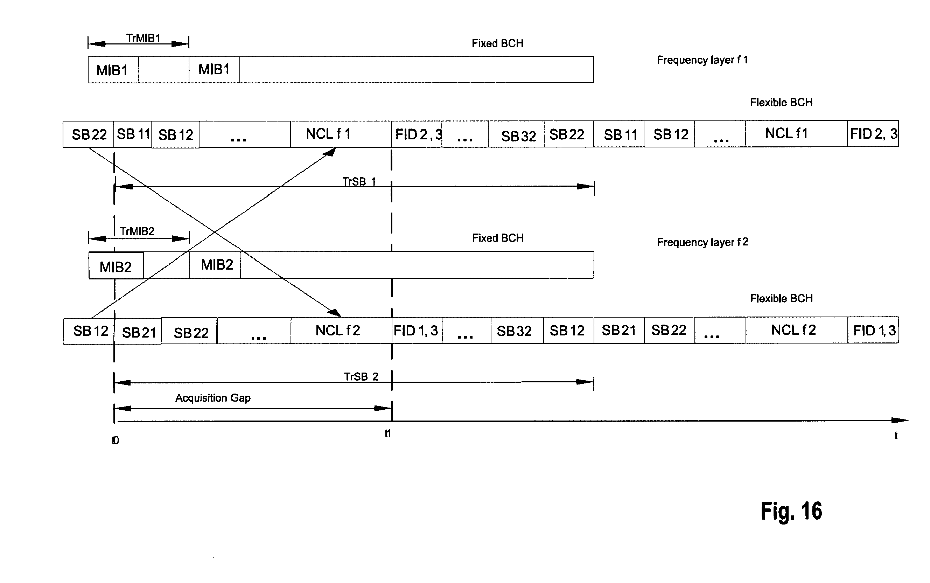

Fig. 16 exemplifies the concept of transmitting in the source cell a pointer to system information of another target cell(s), wherein the source cell uses a frequency carrier f1 and the target cell uses the frequency carrier f2. Another frequency carrier f3 is also available. The MIB is broadcast in the fixed BCH of respective frequency carriers f1 and f2. Furthermore, scheduling blocks, SB1x, are transmitted on frequency carrier f1, and scheduling blocks SB2x are transmitted on frequency layer f2. Also, frequency identifiers 2 and 3 are transmitted in frequency carrier 1 and FIDs 1 and 3 are broadcast via frequency f2. The repetition times TrMIB1, TrMIB2, TrSB1, TrSB2 are also depicted in Fig. 16.

According to one embodiment of the invention, additional scheduling blocks SB22 and SB32 are transmitted on frequency carrier f1. These two SBs respectively correspond to the frequency carriers f1 and f3, and inter alia comprise information to acquire the NCL of another frequency carrier. As depicted, SB22 broadcast on frequency f1 directly points the UE to the NCL f2 on frequency f2. Conversely, SB 12 received from frequency carrier f2 would directly point the UE to NCL f1.

Referring back to Fig. 8 again, a UE is connected to a Node B in the current radio cell (source cell) and exchanges user plane data with the source Node B. In a 3GPP based system, the mobile terminal is in active state when receiving user plane data. The UE may for example periodically provide channel quality measurements to the source Node B, which are evaluated by the source Node B to decide whether or not the UE needs to be handed over to another cell (target cell). However, in order to perform said channel quality measurements, system information from the cell that is to be measured is necessary at first, as just explained.

Accordingly, in contrast to the conventional method explained above, the UE has received beforehand via the broadcast channel (either fixed- and/or flexible-rate BCH) of the source cell from the source NodeB a pointer (or several pointers) to the NCL of the target cell, which is assumed to be frequency carrier f2. The pointer informs the UE about when and where the NCL is broadcast in the BCH of the target cell. This may inter alia include whether the NCL is broadcast on a fixed- and/or flexible-rate broadcast channel. Actually, the pointer shall include all information necessary to point a UE camping in a first cell with a first frequency carrier to specific system information of another cell and thus another frequency carrier. In case the network is not synchronized and the synchronization information, that may be included in the pointer is no longer valid, it might be necessary for the UE to acquire first the SFN from the target cell so as to have a common time reference. Subsequently, the UE may acquire the NCL.

Apparently, there is no need anymore to receive first the MIB since the relevant information from the MIB, i.e. the scheduling information for the NCL, was already received by the UE beforehand in the source cell from the source NodeB.

The UE may thus use the Compressed Mode in order to directly acquire the NCL f2 from the target cell. As the acquisition time is now shorter due to the fact that the MIB has not to be received, the acquisition gap can be made shorter. This yields several advantages, like e.g. that the transmissions have to be interrupted for a shorter time and a smaller amount of data can thereby be lost while being transmitted on a carrier frequency other than the one being measured.

Upon completing the reception of the NCL f2, the UE is able to configure the inter-frequency measurements for said frequency carrier f2 of the target cell. Subsequently, the UE performs said measurements, which again includes the use of the Compressed Mode. Afterwards, the measurement results are reported back to the source NodeB, which in turn evaluates the results and decides on whether to perform a handover or not.

When deciding by the source Node B to hand the UE over to the target Node B, the source Node B sends a handover request to the target Node B which may perform admission control for the UE in response to the request. This request may for example comprise a context transfer of UE-related services and system information to allow the target Node B to configure resources accordingly. If the UE is admitted to connect to the target Node B, the target Node B responds with a handover response, indicating to the source Node B that the target Node B is prepared for the UE to connect to the target cell.

Said information is forwarded via a handover indication to the UE, which is a dedicated control message commanding the UE to tear down the user plane in the source cell and to establish the user plane in the target cell (i.e. to enter active state in the target cell). In 3GPP based systems the UE will stay in active state during the handover procedure. The UE then attaches to the target cell and starts to acquire the necessary target-cell specific system information that is relevant for (attaching to the target cell) and for establishing the user plane in the target cell.

Using the exemplary categorization suggested in Table 1, this relevant information on the target cell may for example be SIB5, SIB7 and SIB 17. As discussed before, the UE has previously received in the source cell from the source NodeB one or several pointers with scheduling information for exactly those SIB5, SIB7 and SIB17. Due to having previously received the pointer to this relevant system information, the UE may immediately acquire SIB5, SIB7 and SIB 17 of the broadcast control logical channel of the target cell when attaching to the target cell. As indicated previously, the UE does not have to acquire the MIB first so as to be able to receive SIB5, SIB7 and SIB17 in the target cell. Having acquired the relevant system information the UE may then activate the user plane with the handover complete message sent to the target Node B and may start exchanging user plane data.

Fig. 9 shows a cell reselection procedure. As for the hard-handover case, the improvements of this procedure according to an exemplary embodiment of the invention will be described next. It is assumed for exemplary purposes that Node Bs act as radio resource control entities in the respective cells. Generally, a cell reselection procedure is performed by UEs in idle mode. In the example shown in Fig. 9, it is assumed for exemplary purposes only that the UE is in active mode first and transmits/receives user plane data in the source cell. Moreover, the UE may provide the source Node B with traffic volume measurements that are evaluated at the source Node B for deciding whether the connection to the UE should be maintained or not. If not - and instead of performing a handover - the source Node B may release the connection to the UE by a connection release message so that the UE enters idle mode. With this message the source Node B so-to-say assigns control of the UE's mobility to the UE. Also, the UE continues to receive the pointers to relevant system information from other potential target cells from the source NodeB via the fixed- and/or flexible-rate broadcast channel of frequency carrier f1. Typically, the relevant system information relates to information for performing a cell reselection, and the potential target cells will be the cells neighbouring the source cell.

Upon receiving the connection release, the UE performs a cell reselection to select a radio cell to connect to. The cell reselection procedure inter alia comprises inter-frequency measurements which in turn requires the NCL of potential target cells on which the measurements are to be performed. Advantageously, the UE already knows the exact location and timing of the NCL f2 from the broadcasted pointer in the source cell, and is thus able to immediately acquire the NCL f2 from the target cell.

The UE then configures the inter-frequency measurements with the received NCL f2 and performs same. Based on said measurements, the UE indeed attaches to the target cell and again needs to get relevant system information from the target cell. As a pointer to the relevant system information of the selected target cell is known to the UE, the UE may start reading the system information in the target cell upon attachment. Further, assuming that the UE (in idle mode) is paged in the target cell or (as shown in Fig. 9) decides to go into active state, i.e. to establish a user plane connection, the UE and the target Node B establish a user plane connection by exchanging connection request, connection setup and connection complete messages.

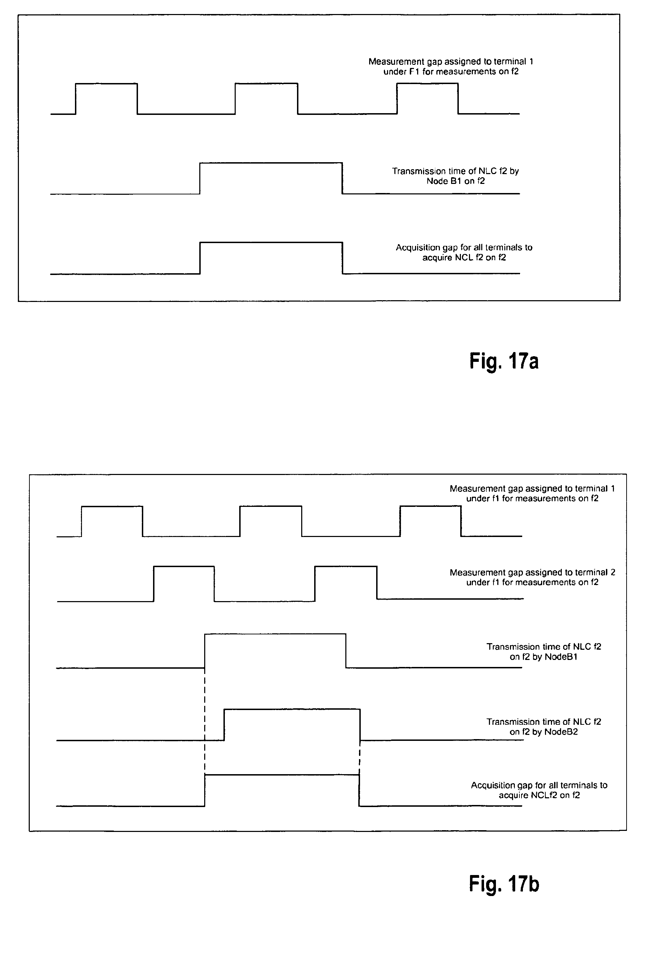

According to another aspect of the invention, mobile terminals can only perform inter-frequency-related operations like NCL acquisition or measurements according to preassigned gaps, made possible by the Compressed Mode. According to one embodiment of the invention, the network may assign to a terminal a measurement gap to fetch the NCL information from another frequency layer. Fig. 17a shows the measurement gap of a terminal that is currently camped on frequency carrier f1 and wants to perform measurements on another cell with frequency layer f2. In the middle band of the figure the transmission time for the NCL f2 from source NodeB is illustrated. Apparently, the resulting acquisition gap for terminals to acquire the NCL f2 from the frequency carrier f2, as illustrated in the last band, is equal to the transmission time in the middle band of Fig. 17a. Since the measurement gap of the terminal is within the time frame of the acquisition gap of the NCL f2, the terminal may use the measurement gap, normally only used for the actual measurements, also to acquire the NCL f2. On the other hand, in case (not shown) where the measurement gap could not be used, i.e. when no time alignment of measurement gap and acquisition gap is present, the network would need to assign an additional gap for acquiring the NCL f2.

Another scenario is presented in Fig. 17b, in which it is assumed that two NodeBs are provided for one radio cell, i.e. NodeB1 and NodeB2 control the target radio cell and use the same frequency layer for communication and broadcast. Accordingly, two transmission times for NCL f2 are present in the target radio cell as illustrated in band three and four of Fig. 17b. Consequently, the acquisition gap for any terminal to receive NCLf2 is the time union of both transmission times of NodeB1 and NodeB2.

Also for exemplary purposes, two terminal are assumed in the source cell camped on frequency layer f1, with respective measurement gaps as shows in the first two bands of Fig. 17b. Apparently, terminal 1 is able to use the measurement gap as acquisition gap, since its measurement gap and the acquisition gap are correctly aligned in time. On the other hand, the measurement gap assigned to terminal 2 is not completely aligned with the time union of the NCL acquisition gaps, and thus an additional terminal acquisition gap, besides the measurement gap, is necessary for terminal 2 in order to get NCL f2.

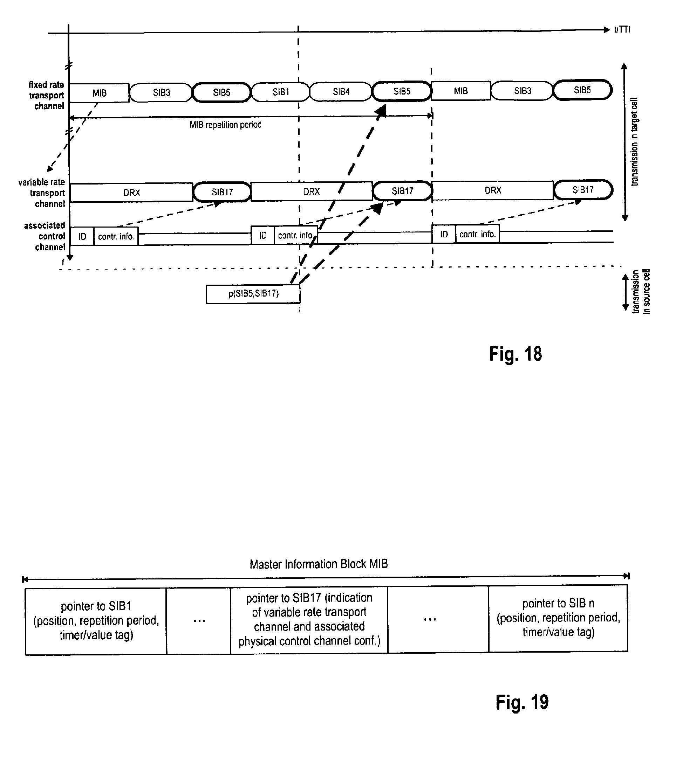

Fig. 18 shows the concept of broadcasting a pointer to target cell-specific system information via the source cell according to another exemplary embodiment of the invention wherein system information in the target cell is mapped to a fixed-rate and flexible-rate transport channel and Layer 1 outband identification is used.

In Fig. 18 system information and related control signaling within the target cell is mapped to three different channels: a fixed-rate transport channel, a flexible-rate transport channel and a physical control channel associated to the flexible-rate transport channel. The control channel is associated to the flexible-rate transport channel in that it contains control information describing transmission format and timing of the system information on the flexible-rate transport channel.

Further, the mobile terminal (or, equivalently, logical to transport channel mapping) to receive the system information in the target cell upon performing a mobility procedure and attaching to the target cell, may be designated by respective Layer 1 outband identification. Accordingly, the logical-to-transport channel mapping is indicated by an identifier on the associated physical control channel ( e.g. L1/2 control channel).

In the target cell, the system information e.g. provided on the broadcast control logical channel (e.g. the BCCH in UMTS), is mapped to the flexible-rate transport channel and the fixed-rate transport channel of Fig. 18.

The Master Information Block (MIB) is transmitted periodically (MIB repetition period) on the fixed-rate transport channel. For example, the MIB may be transmitted after a predetermined time span, such as a given number of transmission time intervals (TTls). Further, assuming a similar channel structure for the fixed-rate and flexible-rate channel as in Fig. 11, a sub-frame may comprise one or more System Information Blocks (SIBs). A SIB comprises a portion of the system broadcast information to be transmitted. For example, each SIB may comprise a predetermined or configurable set of information of a certain category as exemplified in the Table 1.

The MIB used in the exemplary embodiment shown in Fig. 18 is illustrated in Fig. 19 in further detail. Fig. 19 shows an exemplary format of a MIB including a pointer indicating the mapping of system information blocks to a fixed-rate and flexible-rate transport channel when Layer 1 outband signaling as shown in Fig. 18 is used according to an embodiment of the invention. This pointer of the MIB may be broadcasted via the source cell to the mobile terminal to point to the corresponding system information in the target cell. For the Layer 1 outband signaling case it may be assumed that the mobile terminal reads associated physical control channel in the target cell containing scheduling information on the flexible-rate transport channel in the target cell. Hence, the pointer may also contain information on the configuration of associated physical control channel in the target cell. The structure of system broadcast information according to this embodiment of the invention is also tree-like, as has been outlined above. The MIB comprises different partitions of control information each of these partitions being associated to a respective SIB. Similarly, if pointing to individual SIBs such as SIB5 in the target cell by the pointer broadcasted to the mobile terminal through the source cell, the structure and content of the control information may be similar to same used within the MIB of the target cell.

For those SIBs that are mapped for transmission to the fixed-rate transport channel in the target cell, the control information in the MIB or in the broadcasted pointer may have the following structure. Each control information associated to a SIB (pointer to SIB #n) indicates the position of the SIB on the fixed-rate transport channel on which it is transmitted relative to common timing reference. For each cell it is assumed for exemplary purposes that a common timing reference is given by SFN. SFN numbering between neighbouring cells may vary, and therefore target cell's SFN may be transmitted in the pointer so as to acquire beforehand information on the SFN from which the scheduling information is valid. Further, a repetition period of SIB indicating the periodicity at which the respective SIB is transmitted may be indicated in the MIB or the pointer.

The pointer's control information for system information mapped to the flexible-rate transport channel may have a different structure than the control information for the system information mapped to the fixed-rate transport channel. According to an exemplary embodiment, the control information for SIB17 in the MIB or the pointer comprises an indication of the flexible-rate transport channel on which SIB17 is transmitted. This indication is illustrated by the dashed arrow pointing from the MIB to the flexible-rate transport channel in Fig. 18.

As indicated above, Layer 1 outband identification is used for indicating the logical channel-to-transport channel mapping to the receiving mobile terminals. For this purpose, an identification of the mapping is transmitted on the associated control channel (see "ID"). This identification may for example use default or configured identifiers of the logical channel to which a respective transport channel is to be mapped on the receiving side. These identifiers may be transmitted in the MIB. The used identifiers may be default values or may be configured by the system.

The control channel associated to the flexible-rate transport channel comprises control information, which indicates the scheduling of the SIB on the flexible-rate transport channel. This control channel may also be indicated by the pointer broadcasted in the source cell. The control information may at least indicate temporal position of the SIB(s) mapped to the shared channel on that channel for a respective SIB. In another embodiment of the invention the control information on the associated control channel is scheduling information and may comprise information on chunk allocation, data modulation and transport block size.

Returning to the transmission of broadcast system information in UMTS systems for exemplary purposes only, Layer 1 outband identification and transmission of scheduling information are specific for a flexible-rate transport channel, while scheduling information of system information blocks conveyed via fixed-rate transport channel is transmitted within the Master Information Block of the fixed-rate transport channel, that is within Layer 2 transport blocks. The configuration of the fixed-rate transport channel may be for example semi-static, while the configuration of the shared downlink transport channel may be semi-static or dynamic. The flexibility of dynamic configuration of the flexible-rate transport channel in this embodiment of the invention may be advantageous from radio resource utilization perspective since fast scheduling of broadcast system information could be efficiently supported.

In an exemplary embodiment of the invention, the flexible-rate transport channel may be the Shared Downlink CHannel (SDCH) of a UMTS system, while the fixed-rate transport channel may be the Broadcast CHannel (BCH); the control channel associated to the SDCH may be the Shared Control Signaling Channel (SCSCH).

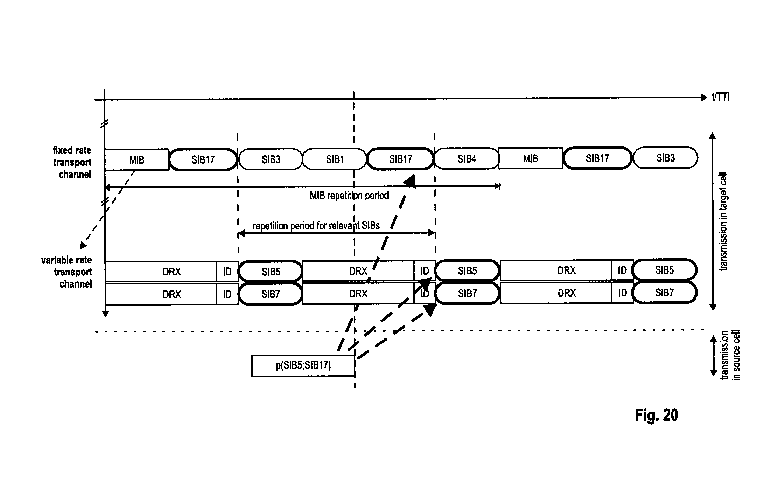

Fig. 20 shows the concept of broadcasting a pointer to target cell-specific system information via the source cell according to another exemplary embodiment of the invention wherein system information in the target cell is mapped to a fixed-rate and flexible-rate transport channel, and Layer 2 inband identification is used.

In the exemplary embodiment illustrated in Fig. 20, a flexible-rate transport channel is used without the need of an associated (physical) control channel for identification. As in the embodiment of the invention described with respect to Fig. 18 and 19, also in the embodiment shown in Fig. 20 system information is mapped to a fixed-rate transport channel and a flexible-rate transport channel. The identifier ("ID") indicating the logical channel-to-transport channel mapping and semi-static configuration information (timing and transmission format) of the shared channel (e.g. SDCH) and configuration of associated physical control channel (e.g. SCSCH) are transmitted inband. This means that both pieces of information are transmitted within Layer 2 packets. For example, the identification ("ID") may be provided within the header of Layer 2 packets of the flexible-rate transport channel, while the configuration information of flexible-rate transport channel may be provided within MIB. Similarly, the pointer transmitted to the UE via the source cell when pointing to a SIB on the flexible-rate channel, may comprise configuration information of flexible-rate transport channel as provided in the MIB of the target cell.

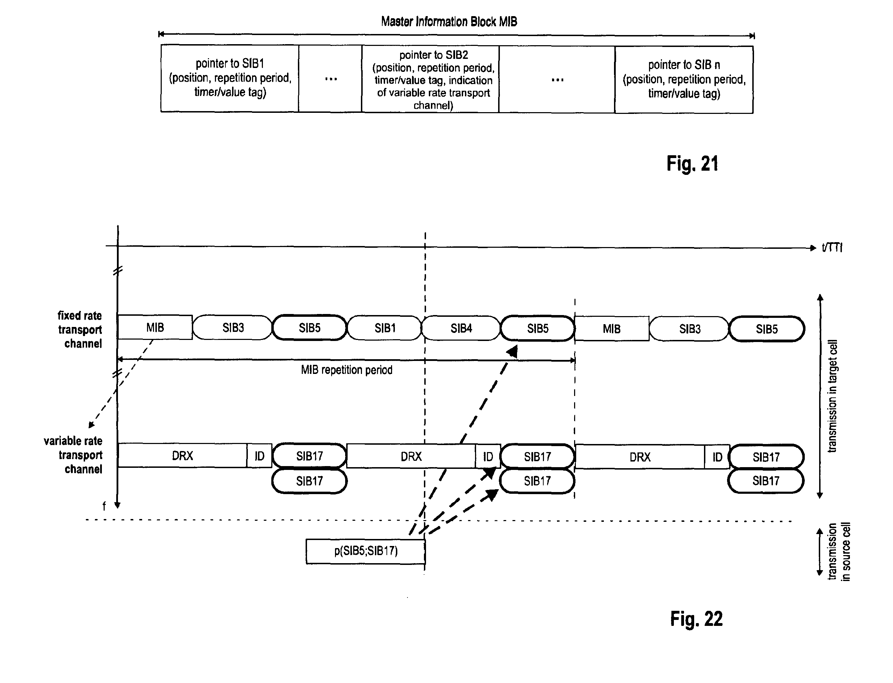

The identifier ID may be a default identifier or may be configured/assigned through MIB of the fixed-rate transport channel, as described above. Fig. 21 shows an exemplary format of a Master Information Block used in the mapping of system information blocks in **Fig. 20.** More specifically, Fig. 21 shows an exemplary format of a MIB including a pointer indicating the mapping of system information blocks to a fixed-rate and flexible-rate transport channel when Layer 2 inband signaling is used to transmit scheduling information on flexible broadcast channel as shown in Fig. 20 according to an embodiment of the invention. This pointer of the MIB may also be broadcasted by the source NodeB in the source cell as pointer sent to the mobile terminal to point to system information in the target cell. The structure of the control information for SIBs mapped to the fixed-rate transport channel is similar to that in the MIB shown in Fig. 19. The MIB control information of the SIBs mapped to the flexible-rate transport channel may in addition comprise an indication of the flexible-rate transport channel to which they have been mapped respectively. Similarly, the pointer of the control message would also comprise an indication of the mapping of the relevant SIB(s) in the target cell.

According to one exemplary embodiment, the system information may be categorized as proposed in Table 1 in the Technological Background section. Further, also a tree-like structure of the broadcast system information using a MIB and SIBs as explained in the Technological Background section is assumed for exemplary purposes.

Considering for exemplary purposes an LTE-UMTS system and a hard handover case, the pointer that is to be broadcasted may include the following information:
- Parts of the MIB (e.g. the before mentioned 'pointer') containing scheduling information for NCL of the target cell (SIB11 and/or SIB 12), SIB5 and SIB17 (and optionally SIB7) valid for the radio cell controlled by the target eNode B, and optionally
- the System Frame Number (SFN) of the target Node B starting from which respective scheduling information is valid.

It should be noted that in this example the information of SIB5 and SIB17 may be considered relevant for the establishment of a radio connection to the target cell.

Considering for exemplary purposes an LTE-UMTS system and a cell reselection case, the pointer may contain the following information:
- parts of MIB (e.g. the before mentioned 'pointer') containing scheduling information for NCL of target cell (SIB11 and/or SIB12), SIB3 and SIB7 (and optionally SIB5) valid for each of eNode Bs from a candidate target cell list, and optionally
- the SFN of each eNode B controlling candidate target cell(s) starting from which respective pieces of scheduling information is valid.

In this example related to the cell reselection procedure the information of SIB3 and SIB7 may be considered relevant for attaching the UE to the target cell.

Another embodiment of the invention relates to increasing the reliability of the transmission of relevant or critical SIBs mapped to the flexible-rate transport channel within the target cell. Fig. 22 shows an exemplary mapping of system information to a fixed-rate and flexible-rate channel in a target cell according to another embodiment of the invention. Assuming that link adaptation techniques (such as adaptive modulation and coding (AMC) and/or power control) are used for transmitting data on the flexible-rate channel, the reliability of data transmission may depend on the geometry of mobile terminal receiving the data. For example, if the mobile terminal is located close to the cell boundary or moves fast within a cell, it may experience poor channel quality (i.e. is in a low geometry) so that the overall frame error rate may increase. In this scenario it may be likely that a mobile terminal may not successfully decode relevant (or critical) system information (such as SIB7 and SIB17 for the handover case) so that the interruption time of the mobility procedure is increased due to the mobile terminal needing to await the next transmission of the relevant (or critical) system information on the flexible-rate transport channel after the repetition period Trep.

To circumvent this problem it may be foreseen to transmit relevant (or critical) SIBs mapped to the flexible-rate channel on more than one resource block (for example the same SIB may be transmitted in two or more resource blocks within a subframe) at a given time instance (subframe or TTI). For example, in Fig. 22 SIB17 is mapped to the flexible-rate transport channel and is sent on two resource blocks at a given time instance. Similarly, it may also be foreseen to repeat relevant system information to consecutive subframes of the flexible-rate transport channel. Accordingly, the pointer transmitted in the source cell that is pointing to the relevant system information in the target cell may indicate the different resource blocks in which a relevant SIB is repeated/transmitted.

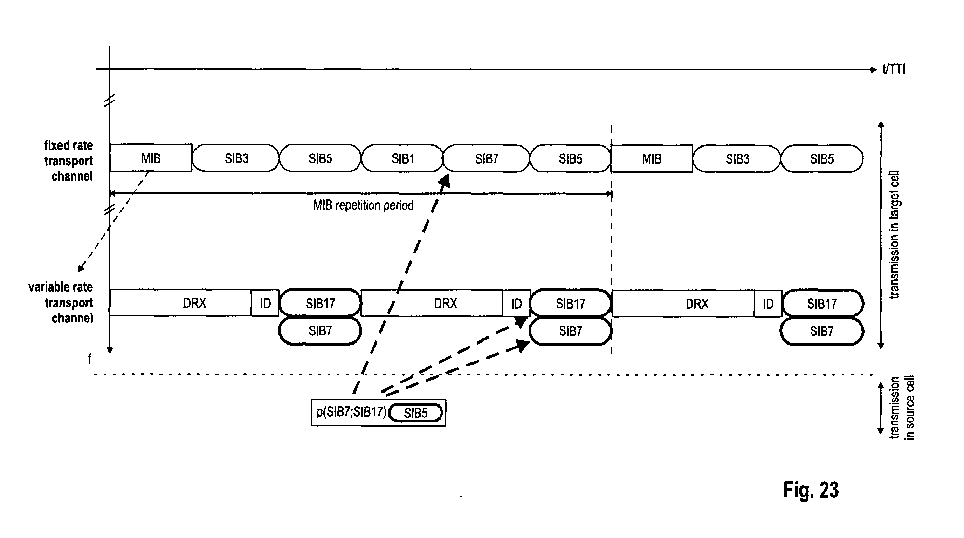

In another embodiment it may also be foreseen to include a portion of the target-cell specific system information (e.g. individual SIBs) into the pointer sent to the mobile terminal from the source NodeB in the source cell. Fig. 23 shows the configuration of the pointer transmitted to the terminal via the source NodeB while the terminal is still located in the source cell according to this exemplary embodiment of the invention. The pointer comprises a portion of the target-cell specific system information and points to the other portion of the target-cell specific system information by means of scheduling information. In the example shown in Fig. 23, the system information of SIB5 of the target cell is comprised within the control message while the pointer further points to SIB7 and SIB17 in the target cell. It is assumed in this example that SIB7 is mapped to the fixed-rate transport channel and SIB17 is mapped to the flexible-rate transport channel.

According to another exemplary embodiment, there may be not sufficient resources in the source cell for transmission of relevant SlBs within the pointer that is to broadcast from the source NodeB. In this case, the relevant SlBs may be further categorized into dynamic SlBs (with contents being often changed) and non-dynamic SlBs (with contents not being often changed). Also in this exemplary embodiment of the invention the transmission of individual relevant SIBs (i.e. portions of the system information) of the target cell within the pointer may be foreseen. In this embodiment, non-dynamic SIBs of the target cell may be broadcast with the pointer in the source cell without loss of system information. Conversely, dynamic SIBs of the target cell may be pointed to by the pointer. Accordingly, as has been indicated above, the resource control entities of neighbouring cells should exchange relevant system information by either signaling the relevant SlBs to the neighbouring radio resource control entities or by providing the neighbouring radio resource control entities with a pointer to the relevant SIBs within their cell. Being aware of the relevant system information and/or their location and mapping in the target cell, the source radio resource control entities may provide a mobile terminal with a pointer to the relevant system information in the target cell or directly with (portions of) the relevant system information.

Assuming for exemplary purposes a categorization of SIBs as provided in Table 1 and assuming the mobile terminal to perform a hard handover procedure, the dynamic SIBs of the target cell may be SIB7 and SIB17 while a non-dynamic SIB is SIB5. For a cell (re)selection procedure, a dynamic SIB may be SIB7 and non-dynamic SIBs may be SIB3 and SIB5.

To generically classify information according to temporal variability (i.e. dynamic or not-dynamic), rates Fv1 and Fv2 (Fv1<Fv2) describing frequency of change of this information may be considered. For example, an information (SIB) may be classified to be of low temporal variability and thus non-dynamic, if its rate of change Fv relates to Fv1 as Fv<=Fv1. Analogously, information may be of high temporal variability or dynamic, if its rate of change Fv relates to Fv1 as Fv>Fv1.

For a large group of mobile terminals, it may be desirable to further reduce signaling load. Another embodiment of the invention thus proposes to further reduce the signaling load in the source cell by defining critical SIBs (these are SIBs which have to be acquired by a terminal in order to perform mobility procedure) and non-critical SIBs (these are SIBs which do not have to be acquired by a terminal in order to perform mobility procedure) for a mobility procedure. It should be noted, that a SIB may be considered relevant for establishing connectivity on the air interface of the target cell or information relevant for changing a point of attachment to the target cell, however it may not be critical for establishing connectivity on the air interface of the target cell or information relevant for changing a point of attachment to the target cell.

For instance, assuming again for exemplary purposes the categorization of system information as provided in Table 1, and considering a hard handover procedure, critical SIBs may be SIB5 and SIB17, or more generally, portions of the system information of the target cell that contain information on the configuration of common physical channels and to shared physical channels in connected mode. This information may be required to establish a connection to the target cell, i.e. to enter active mode in the target cell again to begin user plane data transfer. A relevant SIB which may however be non-critical for a hard handover is uplink interference (i.e. SIB7 in Table 1), if the target Node B controlling the target cell sends timing adjustment to source Node B in the handover response message (compare Fig. 8).

Critical system information or SIBs may for example be defined as part of the system information or SIBs which have to be acquired by a mobile terminal in order to perform a mobility procedure. According to one embodiment, critical system information or SIB(s) may thus be pointed to by in the pointer broadcast in the source cell. In contrast to critical system information/SIBs, non-critical system information may refer to parts of the system information or SIBs which do not have to be acquired by a terminal in order to perform mobility procedure.

For a hard handover procedure, a non-critical SIB may be system information on the uplink interference (e.g. SIB7), if the target Node B sends a timing adjustment to serving Node B in handover response message. Critical SIBs may for example be system information on the common physical channels configuration (e.g. SIB5) and system information on the configuration of shared physical channels in connected mode (e.g. SIB17).

After hard handover, non-synchronized random access may be used by a Node B to estimate, and, if needed, adjust the UE transmission timing to within a fraction of the cyclic prefix. As outlined in 3GPP RAN LTE ad hoc Tdoc R2-062016, "UL Timing Acquisition in LTE HO", available at http://www.3pgg.org and incorporated herein by reference, in the source cell the mobile terminal may obtain the uplink timing adjustment information Δ1 by the uplink synchronization code. The target Node B may also receive the same uplink sync code and estimate the timing adjustment information Δ2 aligned to its own timing. The target Node B may feedback Δ2 to the source Node B, for example in the handover response message send from target Node B to source Node B. Therefore, for the initial non-synchronized random access after completion of Hard Handover procedure, a UE may not need to acquire SlB7 information so that same may not be classified "critical".

Similar to the hard handover case, also for cell (re)selection procedure, critical SIBs and non-critical SIBs may be defined. In one example, the critical SIBs for a cell reselection may be SIB3 and SIB7, while SIB5 may be considered non-critical for a mobile terminal-originated service.

It should be noted that a combination of transmission of relevant SIBs on fixed- and flexible-rate part of broadcast channel may also be possible depending on the timing for reception of dedicated message.

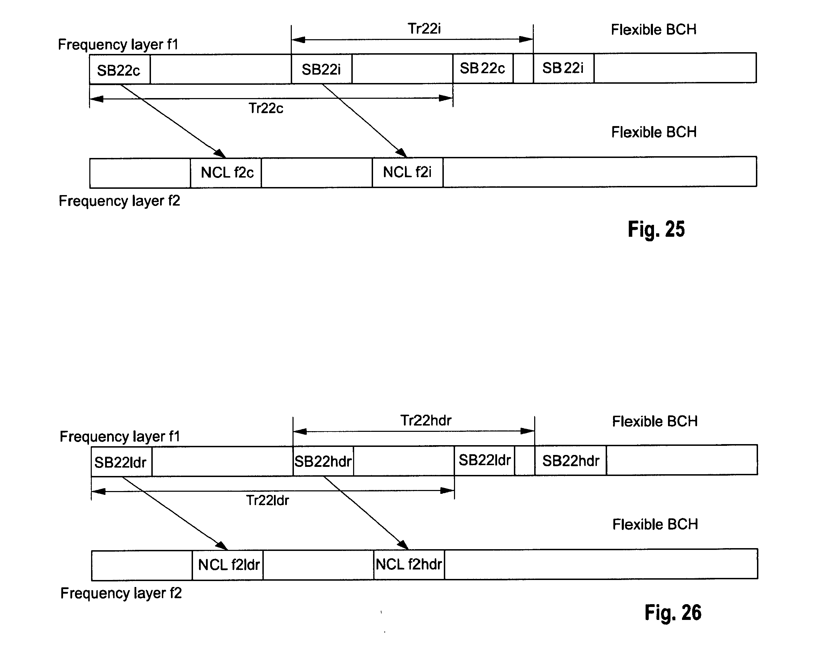

According to another embodiment of the invention, the NCL acquisition can be made more flexible, by separating the NCL information for RRC_Connected state and RRC_Idle state. Fig. 25 illustrates said separation, wherein NCL information for RRC_Connected state is denoted NCLc and may comprise the following parameters:
- inter-frequency measurement configuration for handover.

Conversely, the NCL for RRC_Idle state is denoted NCLi and may comprise the following parameters:
- Cell individual offset,
- Cell scrambling code, and
- Cell (re) selection information.

In said case, the scheduling information broadcasted from the source NodeB in the source cell on frequency layer f1 for pointing the UE to the NCL information on frequency carrier f2 of the target cell may also be separated between scheduling information for RRC_Connected state, denoted SB22c, and for NCL information for RRC_Idle state, denoted SB22i. In this exemplary illustration according to Fig. 25, it is apparently assumed that the pointers are transmitted on the flexible-rate broadcast transport channel. Furthermore, this separation has no influence on the additional pointing information that can be included in the pointer, so as to acquire SIB3, SIB5, SIB7 and/or SIB17 for mobility procedures, regarding hard handover and/or cell (re) selection. In particular, the scheduling information to acquire said SIBs may be respectively included in both pointers, SB22c and SB22i, or may be disposed separately in the same or other pointers.

Additionally, the pointers may be transmitted with different repetition cycles. This is advantageous as it can be used to save capacity if, for example, different acquisition times are necessary for RRC_Connected state and RRC_Idle state.

Similar to the previous embodiment of the invention as illustrated with respect to Fig. 25, the separation of the pointer information may also be based on the cell bandwidth capability. More specifically and with reference to Fig. 26, the NCL information can be further separated according to cell bandwidth capability as follows. The Neighbouring Cell List for those cells supporting higher data rates (e.g. with larger bandwidth allocation) are exemplary denoted NCLf2hdr. Correspondingly, NCL for those cells supporting lower data rates (e.g. with smaller bandwidth allocation), is denoted NCLf2ldr. The pointer that is broadcast in the source cell is also separated in accordance with the cell bandwidth capability, and respectively points to the two NCLs. In particular, SB22ldr points to the NCLf2ldr, and SB22hdr informs the UE about the transmission of NCLf2hdr. Consequently, separate acquisition for terminal using e.g. services with different requirements is possible.

Furthermore, it can be assumed that NCLf2hdr is transmitted with higher repetition rate relative to NCLf2ldr, so as to decrease the overall handover time, including interruption time, for higher data rates.

In case of cell reselection and/or hard handover, there may be several neighbouring radio cells being potential candidates for being selected by the UE. Therefore, the overall size of the pointer that is broadcast in the source cell may be too large, if scheduling information to all cell-specific system information regarding mobility procedures (SIB3, SIB5, SIB7, SIB17) for all neighbouring cells being potential target cells is included therein. In one exemplary embodiment of the invention the size of information on the potential target cells in the pointer may be decreased according to one of the following events triggered in the network based on measurement reports:
- A new cell enters predefined reporting range (i.e. measurement report indicates a channel quality above a threshold level). Add the cell to the cell list for reporting to mobile terminal.
- A cell in the list leaves reporting range (i.e. measurement report indicates a channel quality equal or below a threshold level). Remove the cell from the cell list.

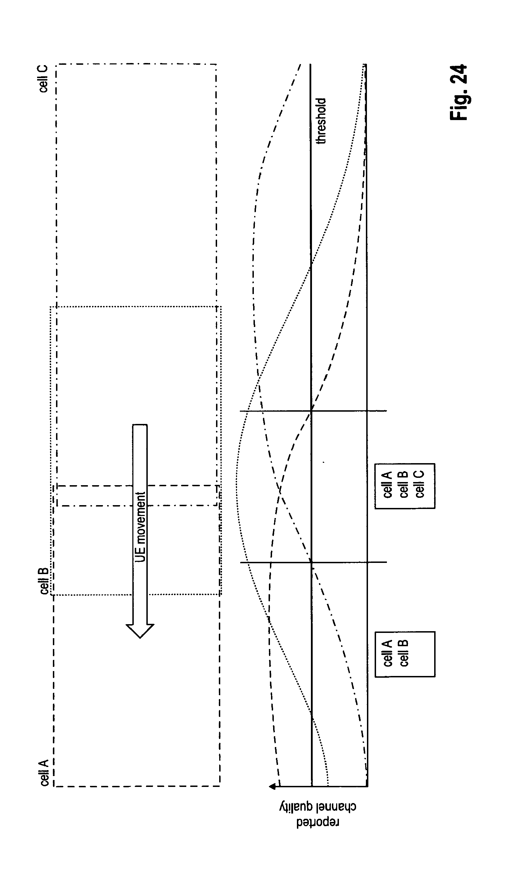

As illustrated for exemplary purposes in Fig. 24, a mobile terminal may move along the movement direction thereby experiencing and reporting different channel qualities for neighbouring cells A through C. The initial neighbouring cell list maintained by the Node B currently serving the mobile terminal may thus first contain cell A, cell B and cell C while finally, when having moved towards cell C, the neighbouring cell list may only be cell B and cell C. Accordingly, depending on the mobile terminals location upon deciding to send the connection release message and/or the RRC handover indication message to the mobile terminal, the currently serving Node B (source Node B) may broadcast a pointer to relevant system information in cells A through C or B and C, respectively.

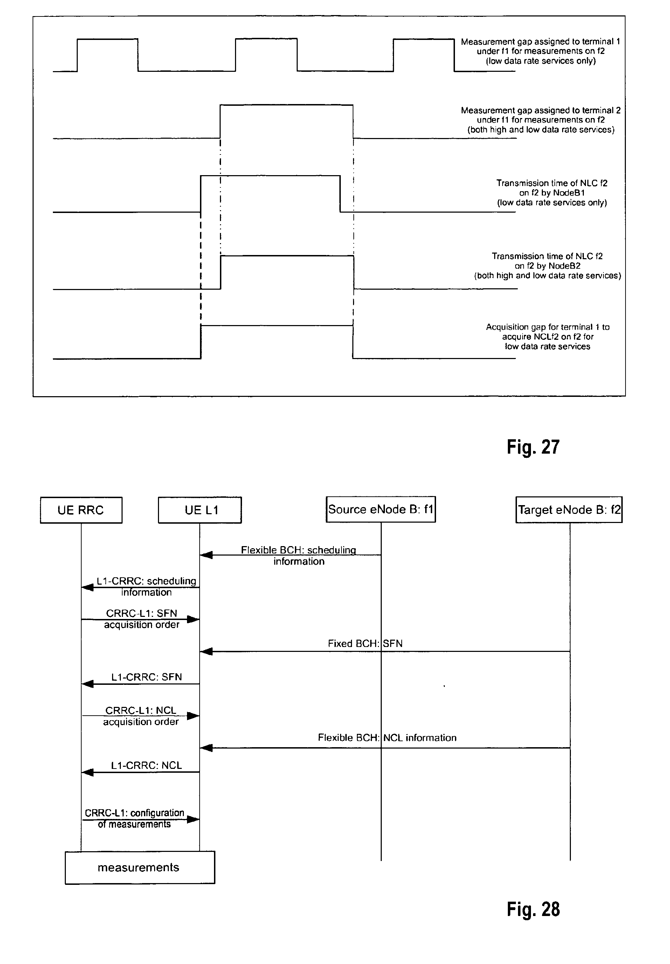

In another embodiment of the invention, a terminal 2 should obtain information from only a certain NodeB (e.g. supporting NCL with high data rate services). In particular, as apparent from the first two horizontal bands of Fig. 27, the measurement gaps of terminal 1 and terminal 2 are differently configured for measurements on the frequency layer f2. Also, the NCL transmissions on the flexible BCHs of NodeB1 (supporting low data rate services only) and of NodeB2 (supporting both high and low data rate services) are different, i.e. they are not time-aligned. Consequently, a general gap is assigned to terminals which don't use only high data rate services, as for example terminal 1, wherein the general gap is a time union of the two transmission times of NodeB1 and NodeB2. This results from the fact that terminal 1 is able to receive its corresponding NCL from both NodeBs, since both support the low data rate services, in contrast to terminal 2.

The measurement gap for inter-frequency measurements on f2 of terminal 2 under f1 corresponds in its duration and temporary alignment to the NCL f2 transmission from NodeB2 under f2, as can be seen in Fig. 27. Since the terminal 2 is supposed to use only high data rate services, terminal 2 can use this measurement gap also for NCL f2 acquisition.

In summary, if a terminal (terminal 2) should obtain information from only a certain NodeB (e.g. NodeB2: containing NCL for high data rate services) and its gap for inter-frequency measurements corresponds to the transmission of NCL on that certain NodeB, then, the general gap, which is assigned for acquisition of NCL by other terminals (terminal 1) should not be applied to that terminal. Rather, said terminal (terminal 2) is only assigned a measurement gap that is timely aligned with the transmission of the NCL from NodeB2. Therefore, this particular terminal will apply its measurement gap also for NCL information acquisition in order to receive system data more efficiently under frequency carrier f1.

Fig. 28 shows some internal processes in the UE that are necessary to acquire the NCL of another frequency carrier f2, while being camped or attached to a radio cell with the frequency carrier f1. Accordingly, a terminal would have to store the scheduling information, relating to system information of the target cell in its Layer 3, being the Control-RRC (CRRC) entity. The pointer information is broadcast from the source NodeB and first received in its Layer 1. The next step is only necessary in case of unsynchronized networks and missing or non-valid SFN in the scheduling information (pointer). In particular, in such cases Layer 3 would use services provided by Layer 1 to acquire the SFN from the fixed-rate broadcast transport channel of the target cell.

Upon complete reception of the SFN in Layer 3, Layer 3 again uses the services of Layer 1 to acquire the NCL from frequency carrier f2 of the target cell. The NCL is forwarded from Layer 1 to Layer 3, which in turn uses the NCL to configure the inter-frequency measurements. The process is completed by the actual measurements. These interaction between the different layers of the UE can be defined by means of primitives.

Further, as already briefly mentioned above it is to be noted that the concepts of the invention outlined in various exemplary embodiments herein may be advantageously used in a mobile communication system as described in the Technological background section that may for example have an architecture as exemplified in Fig. 1 or Fig. 2. In this exemplary network architecture, a fixed-rate transport channel (e.g. broadcast transport channel) and/or a flexible-rate transport channel (e.g. shared transport channel) may be used for communication on uplink and/or downlink on the air interface between mobile stations (UEs) and base stations (Node Bs). For communication in the mobile communication system e.g. an OFDM scheme, a MC-CDMA scheme or an OFDM scheme with pulse shaping (OFDM/OQAM) may be used. In some embodiments the scheduler may schedule the resources on a per-resource block basis (i.e. per sub-frame basis in the time domain) or on a transmission time interval (TTI) basis, wherein in the latter case it may be assumed that a TTI comprises one or more sub-frames in the time domain. In a further embodiment link adaptation techniques, such as adaptive modulation and coding (AMC), transmission power control and/or HARQ may be used for communication on the shared transport channel.

In one embodiment of the invention, the shared transport channel has 10 MHz bandwidth and consists out of 600 subcarriers with a subcarrier spacing of 15 kHz. The 600 subcarriers may then be grouped into 24 subbands (each containing 25 subcarriers), each subband occupying a bandwidth of 375 kHz. Assuming, that a sub-frame has a duration of 0.5 ms, a resource block (RB) spans over 375 kHz and 0.5 ms.

Alternatively, a subband may consist of 12 subcarriers, 50 of those subbands constituting the available 600 subcarriers. With a transmission time interval (TTI) of 1.0 ms, equivalent to 2 sub-frames, a resource block (RB) spans over 300 kHz and 1.0 ms in this example.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GPP.

## Claims

1. A method for informing a mobile terminal, being located in a first cell within a mobile communication system, on system information of a second cell broadcast within the second cell, the method comprising the steps of:
transmitting from a base station of the first cell to the mobile terminal at least one pointer to the system information of the second cell, while the mobile terminal is located in the first cell.

2. The method of claim 1, wherein the system information of the second cell is broadcast on a second frequency carrier within the second cell, and the base station of the first cell uses a first frequency carrier for communication, wherein the step of transmitting comprises :
broadcasting by the base station on the first frequency carrier the at least one pointer to the system information broadcast on the second frequency carrier.

3. The method of claim 2, wherein the mobile terminal is listening to the first frequency carrier, and the method further comprises the steps of:
receiving by the mobile terminal the at least one pointer broadcast on the first frequency carrier, wherein the at least one pointer directly points to the system information broadcast on the second frequency carrier, and
acquiring by the mobile terminal the system information on the second frequency carrier using the received at least one pointer.

4. The method of claims 2 or 3, wherein the system information is broadcast in form of at least one system information block.

5. The method of one of claims 2 to 4, wherein the at least one pointer is broadcast on a first broadcast transport channel of the first frequency carrier, and the system information is broadcast on a second broadcast transport channel of the second frequency carrier.

6. The method of claim 5, wherein the first and second broadcast transport channels respectively comprise a fixed-rate and a flexible-rate broadcast transport channel, and the system information is broadcast on the second fixed-rate and/or the second flexible-rate broadcast transport channel.

7. The method of claim 6, wherein the at least one pointer is broadcast on the first fixed-rate and/or the first flexible-rate broadcast transport channel.

8. The method of claim 4, wherein the at least one pointer indicates whether the at least one system information block is transmitted on a second fixed-rate broadcast transport channel and/or a second flexible-rate broadcast transport channel.

9. The method of claim 4 or 8, wherein the at least one pointer indicates the transmission format and timing of the at least one system information block broadcast on the second frequency carrier.

10. The method of one of claims 2 to 9, wherein the system information is information necessary for performing inter-frequency measurements by the mobile terminal.

11. The method of claim 10, wherein the system information relates to a neighbouring cell list of the second frequency carrier.

12. The method of one of claims 2 to 9, wherein the system information is necessary for performing a mobility procedure by the mobile terminal.

13. The method of claim 12, wherein the mobility procedure includes changing connectivity or point of attachment from a source cell to a target cell, wherein the at least one pointer is transmitted via the first frequency carrier in the source cell, and the system information is target cell-specific system information and is transmitted via the second frequency carrier in the target cell.

14. The method of one of claims 2 to 13, wherein other system information is broadcast on the first frequency carrier, and the method further comprises the step of:
broadcasting by the mobile communication system on the second frequency carrier at least one pointer to the other system information broadcast on the first frequency carrier.

15. The method of one of claims 2 to 14, wherein the first frequency carrier is used by a first base station for communication with mobile terminals, and the second frequency carrier is used by a second base station for communication with mobile terminals, the method further comprising the step of:
transmitting the at least one pointer to the system information broadcast on the second frequency carrier from the second base station to the first base station.

16. The method of claim 15, wherein the step of transmitting the at least one pointer from the second base station to the first base station is performed by the second base station either periodically, or after the at least one pointer has changed in the second base station, or after receiving in the second base station a request for the at least one pointer from the first base station.

17. The method of one of claims 2 to 16, wherein the first and second frequency carriers are respectively one of a plurality of frequency carriers used in a hierarchical cell structure of the mobile communication system.

18. The method of claim 17, wherein the plurality of frequency carriers is respectively used for communication with mobile terminals by different base stations.

19. The method of claim 17, wherein all of the plurality of frequency carriers are used for communication with mobile terminals by one base station.

20. The method of claim 17, wherein particular system information belonging to a particular frequency carrier is broadcast only on said particular frequency carrier, the particular frequency carrier being one of the plurality of frequency carriers, and wherein
at least one particular pointer to said particular system information is broadcast on each of the plurality of frequency carriers of the mobile communication system.

21. The method of one of claims 2 to 20, further comprising the step of:
assigning to the mobile terminal by the mobile communication system at least one acquisition gap in data transmission streams of the mobile terminal, and
wherein said at least one acquisition gap is used by the mobile terminal to acquire the system information on the second frequency carrier using the received at least one pointer.

22. The method of claim 21, wherein the mobile communication system assigns to the mobile terminal at least one measurement gap in data transmission streams of the mobile terminal for performing inter-frequency measurements by the mobile terminal, and wherein
in case the broadcast of the system information on the second frequency carrier is timely aligned with the at least one measurement gap, the at least one measurement gap is assigned as the at least one acquisition gap to the mobile terminal, and
in case the broadcast of the system information on the second frequency carrier is not timely aligned with the at least one measurement gap, the at least one measurement gap is not assigned as the at least one acquisition gap to the mobile terminal.

23. The method of one of claims 2 to 22, wherein the system information broadcast on the second frequency carrier relates to a neighbouring cell list, and a first part of the neighbouring cell list applies to mobile terminals in a connected state, and a second part of the neighbouring cell list applies to mobile terminals in an idle state, and wherein
the at least one pointer to the neighbouring cell list broadcast on the first frequency carrier is separated into a first part for the first part of the neighbouring cell list applying to mobile terminals in the connected state, and a second part for the second part of the neighbouring cell list applying to mobile terminals in the idle state.

24. The method of one of claims 2 to 22, wherein the system information broadcast on the second frequency carrier relates to a neighbouring cell list, and a first part of the neighbouring cell list supports low data rates, and a second part of the neighbouring cell list supports high data rates, and wherein the at least one pointer to the neighbouring cell list broadcast on the first frequency carrier is separated into a first part for the first part of the neighbouring cell list supporting low data rates, and a second part for the second part of the neighbouring cell list supporting high data rates.

25. The method of claim 23 or 24, wherein the first part and the second part of the at least one pointer are broadcast in different scheduling blocks on the first frequency carrier with different repetition cycles.

26. The method of one of claims 2 to 25, wherein the mobile communication system is timely unsynchronized and the method further comprises the step of:
acquiring by the mobile terminal synchronization information from the second frequency carrier for synchronizing the mobile terminal to the transmission timing of the second frequency carrier.

27. The method of claim 26, the method further comprising the steps of:
forwarding the received at least one pointer from a first-layer protocol of the mobile terminal to a third-layer protocol of the mobile terminal,
in response to the received at least one pointer, transmitting from the third-layer protocol a first acquisition order to the first-layer protocol for acquiring the synchronization information from the second frequency carrier,
upon acquiring by the first-layer protocol of the mobile terminal the synchronization information from the second frequency carrier, forwarding the acquired synchronization information to the third-layer protocol,
in response to the forwarded synchronization information, transmitting from the third-layer protocol a second acquisition order to the first-layer protocol for acquiring the system information from the second frequency carrier,
upon acquiring by the first-layer protocol of the mobile terminal the system information, forwarding a first part of the acquired system information to the third-layer protocol, wherein the first part of the system information is relevant for the configuration of inter-frequency measurement, and
configuring by the third-layer protocol of the mobile terminal the first-layer protocol to perform the inter-frequency measurements based on the first part of the system information.

28. The method of claim 27, wherein the synchronization information is a system frame number, which is broadcast on a fixed-rate broadcast transport channel of the second cell.

29. A base station for informing a mobile terminal, being located in a first cell of a mobile communication system, on system information of a second cell broadcast within the second cell, the base station comprising:
a transmitter for transmitting to the mobile terminal at least one pointer to the system information of the second cell, while the mobile terminal is located in the first cell.

30. The base station of claim 29 , wherein the system information of the second cell is broadcast on a second frequency carrier within the second cell, and the base station of the first cell uses a first frequency carrier for communication, wherein :
the transmitter is further adapted to broadcast on the first frequency carrier the at least one pointer to the system information broadcast on the second frequency carrier.

31. The base station of claim 30, wherein the base station uses the first and second frequency carriers for communication with mobile terminals.

32. The base station of claim 31, wherein the transmitter of the base station is adapted to broadcast the at least one pointer on a first broadcast transport channel of the first frequency carrier, and to broadcast the system information on a second broadcast transport channel of the second frequency carrier, the first and second broadcast transport channels respectively comprising a fixed-rate and a flexible-rate broadcast transport channel, and wherein
the transmitter of the base station is adapted to broadcast the system information on the second fixed-rate and/or the second flexible-rate broadcast transport channel, and to broadcast the at least one pointer on the first fixed-rate and/or first flexible-rate broadcast transport channel.

33. The base station of one claims 31 to 32, wherein the first and second frequency carriers are respectively one of a plurality of frequency carriers used in a hierarchical cell structure of the mobile communication system, and wherein the base station comprises:
the transmitter being further adapted to broadcast on each of the plurality of frequency carriers at least one particular pointer to particular system information, that is broadcast only on a particular frequency carrier.

34. The base station of claim 30, wherein the base station uses the first frequency carrier for communication with mobile terminals, and a second base station uses the second frequency carrier for communication with the mobile terminals, wherein the base station comprises:
a receiver being adapted to receive from the second base station the at least one pointer to the system information broadcast on the second frequency carrier of the base station.

35. The base station of claim 34 further comprising:
the transmitter is further adapted to transmit a request to the second base station for the at least one pointer, and
the receiver is further adapted to receive either periodically, or after the at least one pointer has changed in the second base station, or in response to the transmitted request, the at least one pointer from the second base station.

36. The base station of one of claims 30 to 35, further comprising:
a processor adapted to assign to the mobile terminal at least one acquisition gap in data transmission streams of the mobile terminal, wherein said at least one acquisition gap is used by the mobile terminal to acquire the system information on the second frequency carrier using the received at least one pointer, and
the transmitter is adapted to transmit to the mobile terminal information about the assignment of the at least one acquisition gap.

37. The base station of one of claims 30 to 36, wherein the system information relates to a neighbouring cell list, and a first part of the neighbouring cell list applies to mobile terminals in a connected state, and a second part of the neighbouring cell list applies to mobile terminals in an idle state, and wherein the base station further comprises:
the transmitter being further adapted to broadcast on the first frequency carrier a first part of the at least one pointer to the first part of the neighbouring cell list applying to mobile terminals in the connected state, and to broadcast a second part of the at least one pointer to the second part of the neighbouring cell list applying to mobile terminals in the idle state.

38. The base station of one of claims 30 to 37, wherein the system information relates to a neighbouring cell list, and a first part of the neighbouring cell list supports low data rates, and a second part of the neighbouring cell list supports high data rates, and wherein
the transmitter is further adapted to broadcast on the first frequency carrier a first part of the at least one pointer to the first part of neighbouring cell list supporting low data rates, and to broadcast a second part of the at least one pointer to the second part of the neighbouring cell list supporting high data rates.

39. The base station of one of claims 30 to 38 further comprising means to perform or participate in the steps of the method according to one of the claims 1 to 28.

40. A mobile terminal, being located in a first cell, for communicating within a mobile communication system, wherein system information of a second cell is broadcast within the second cell, and the mobile terminal comprises:
a receiver adapted to receive from a base station of the first cell at least one pointer to the system information broadcast within the second cell, while the mobile terminal is located in the first cell.

41. The mobile terminal of claim 40, wherein the system information is broadcast on a second frequency carrier within the second cell, and the base station of the first cell uses a first frequency carrier for communication, and wherein:
the receiver is further adapted to receive from the base station on the first frequency carrier the at least one pointer to the system information broadcast on the second frequency carrier.

42. The mobile terminal of claim 41, wherein the mobile terminal is listening to the first frequency carrier, and wherein the at least one pointer directly points to the system information broadcast on the second frequency carrier, and the mobile terminal further comprises:
the receiver being adapted to acquire the system information on the second frequency carrier using the received at least one pointer.

43. The mobile terminal of claims 41 or 42, wherein the mobile communication system assigns to the mobile terminal at least one acquisition gap in data transmissions of the mobile terminal, and wherein
the receiver is further adapted to receive information on the assignment of the at least one acquisition gap, and
the receiver is further adapted to acquire the system information on the second frequency carrier using the received at least one pointer inside the acquisition gap.

44. The mobile terminal of one of claims 40 to 43, wherein the mobile communication system is timely unsynchronized, and
the receiver is further adapted to acquire synchronization information from the second frequency carrier for synchronizing the mobile terminal to the transmission timing of the second frequency carrier.

45. The mobile terminal of claim 44, wherein
a transmitter is adapted to forward the received at least one pointer from a first-layer protocol of the mobile terminal to a third-layer protocol of the mobile terminal,
the transmitter is further adapted to transmit from the third-layer protocol a first acquisition order to the first-layer protocol for acquiring the synchronization information from the second frequency carrier, in response to the forwarded at least one pointer,
the receiver is further adapted to acquire by the first-layer protocol the synchronization information from the second frequency carrier,
the transmitter is further adapted to forward the acquired synchronization information to the third-layer protocol,
the transmitted is further adapted to transmit from the third-layer protocol a second acquisition order to the first-layer protocol for acquiring the system information from the second frequency carrier, in response to the received synchronization information in the third-layer protocol,
the receiver is further adapted to acquire the system information by the first-layer protocol,
the transmitter is adapted to forward a first part of the acquired system information to the third-layer protocol, wherein the first part of the system information is relevant for the configuration of inter-frequency measurements or cell selection, and
a processor adapted to configure by the third-layer protocol the first-layer protocol to perform the inter-frequency measurements based on the first part of the system information.

46. The mobile terminal of one of claims 40 to 45, further comprising means to perform or participate in the steps of the method according to one of claims 1 to 28.

47. A communication system comprising a base station according to one of claims 29-39 and a mobile terminal according to one of claims 40 to 46.
